# FASCICULE DE BREVET EUROPEEN

(11) **EP 3 319 824 B1**
(45) Date de publication et mention de la délivrance du brevet: **03.03.2021**
(21) Numéro de dépôt: 16734621.2
(22) Date de dépôt: 30.06.2016
(51) Int. Cl.: B60H 1/34, B60H 1/00

(54) **DISPOSITIF DE CHAUFFAGE, VENTILATION ET/OU CLIMATISATION POUR VEHICULE AUTOMOBILE, MODULE ADDITIONNEL ET PROCEDE D'ASSEMBLAGE CORRESPONDANTS**
KRAFTFAHRZEUGHEIZ-, BELÜFTUNGS- UND/ODER KLIMATISIERUNGSVORRICHTUNG UND ENTSPRECHENDES ZUSATZMODUL UND MONTAGEVERFAHREN
MOTOR VEHICLE HEATING, VENTILATION AND/OR AIR CONDITIONING DEVICE AND CORRESPONDING ADDITIONAL MODULE AND METHOD OF ASSEMBLY

(30) Priorité: 10.07.2015 FR 1556557
(43) Date de publication de la demande: 16.05.2018
(73) Titulaire: Valeo Systemes Thermiques, 78320 Le Mesnil Saint Denis (FR)
(72) Inventeur: PIERRES, Philippe, 78322 Le Mesnil Saint-Denis Cedex (FR); LISKA, Jan, 108 00 Prague (CZ)
(74) Mandataire: Tran, Chi-Hai
(86) Numéro de dépôt international: PCT/EP2016/065282
(87) Numéro de publication internationale: WO 2017/009055

(56) Documents cités:
- EP-A1- 1 634 735
- FR-A1- 2 778 152
- JP-A- 2015 080 959
- US-A1- 2003 037 918
- US-B1- 6 568 468

## Description

### DOMAINE TECHNIQUE DE L'INVENTION

La présente invention concerne le domaine des dispositifs de chauffage, ventilation et/ou climatisation pour véhicule automobile. L'invention concerne également un module additionnel pour un tel dispositif de chauffage, ventilation et/ou climatisation ainsi qu'un procédé d'assemblage dudit dispositif.

### ETAT DE LA TECHNIQUE ANTERIEUR

Un véhicule automobile est couramment équipé d'un dispositif de ventilation, de chauffage et/ou de climatisation pour réguler les paramètres aérothermiques d'un flux d'air distribué vers l'intérieur de l'habitacle du véhicule. Un tel dispositif est couramment appelé HVAC (pour Heating, Ventilation and Air-Conditioning en anglais). Le dispositif comprend généralement un boîtier délimité par des cloisons dans lesquelles sont ménagées des ouvertures, dont au moins une entrée d'air et au moins une sortie d'air.

Le document US 2003/037918 A1 divulgue un dispositif de chauffage, ventilation et/ou climatisation pour véhicule automobile d'un type connu. De façon connue, un pulseur est mis en œuvre pour faire circuler le flux d'air depuis l'entrée d'air vers la sortie d'air. Il peut s'agir d'un flux d'air neuf provenant de l'extérieur du véhicule ou d'un flux d'air recyclé provenant de l'habitacle du véhicule ou encore d'un mélange des flux d'air extérieur et recyclé.

Le boîtier loge aussi des moyens de traitement thermique, tels que des échangeurs thermiques, pour réchauffer et/ou refroidir le flux d'air préalablement à sa distribution à l'intérieur de l'habitacle. A titre d'exemple, les moyens de traitement thermique peuvent comprendre un évaporateur qui est destiné à refroidir et déshumidifier le flux d'air le traversant, ainsi qu'un organe de chauffage, notamment un radiateur, éventuellement associé à un radiateur additionnel, qui est destiné à réchauffer le flux d'air qui le traverse.

Il est connu, dans ces dispositifs, d'avoir un évaporateur disposé en aval de l'entrée d'air selon le sens d'écoulement du flux d'air, de sorte que la totalité du flux d'air entrant à l'intérieur du boîtier soit déshumidifié par l'évaporateur. Puis, le flux d'air froid ainsi généré est admis dans une chambre de mixage principale et/ou orienté vers un organe de chauffage, notamment un radiateur et éventuellement un radiateur additionnel, pour obtenir un flux d'air chaud.

La chambre de mixage principale sert à mélanger un ou plusieurs flux d'air froid et/ou chaud de sorte que le flux d'air issu du mélange, ayant la température de consigne souhaitée, soit distribué vers des zones spécifiques de l'habitacle du véhicule automobile. La chambre de mixage principale est pourvue d'un premier organe de mixage, tel qu'un volet, afin de définir la proportion du flux d'air froid et du flux d'air chaud pénétrant dans la chambre de mixage principale. Cet organe de mixage permet ainsi d'ajuster la température du flux d'air mélangé destiné à être distribué dans la(es) zone(s) dédiées de l'habitacle, comme par exemple les zones avant et arrière.

Toutefois, il est également souhaitable de prévoir une possibilité de gérer thermiquement les différentes zones du véhicule de manière indépendante, notamment pour les véhicules haut de gamme. Pour ce faire, le boîtier loge également une chambre de mixage secondaire destinée à générer un flux d'air secondaire pour aérer une ou plusieurs autres zones de l'habitacle.

La chambre de mixage secondaire est aussi en communication aéraulique avec l'organe de chauffage et apte à recevoir tout ou une partie du flux d'air ayant traversé l'évaporateur du dispositif de chauffage, de ventilation et/ou de climatisation. La chambre de mixage secondaire est équipée d'un deuxième organe de mixage, tel qu'un volet, afin de définir la proportion du flux d'air froid et du flux d'air chaud pénétrant dans la chambre de mixage secondaire pour ajuster la température du flux d'air distribué dans les autres zones du véhicule.

Dans ce cas la chambre de mixage principale est généralement prévue dans une partie haute du dispositif de chauffage, ventilation et/ou climatisation tandis que la chambre de mixage secondaire est généralement prévue dans une partie basse du dispositif de chauffage, ventilation et/ou climatisation.

Avec un dispositif de chauffage, ventilation et/ou climatisation fonctionnant selon un mode trois-quatre zones, il est connu que la chambre de mixage principale alimente les buses de sortie à l'avant de l'habitacle du véhicule, incluant les buses de sortie vers les pieds à l'avant, tandis que la chambre de mixage secondaire alimente les buses de sortie à l'arrière de l'habitacle.

Egalement, comme dit précédemment, le dispositif de chauffage, ventilation et/ou climatisation, peut être alimenté soit en air extérieur au véhicule (également appelé air neuf), soit en air de recyclage, c'est-à-dire issu de l'habitacle du véhicule. Suivant les conditions de fonctionnement, il peut être particulièrement intéressant d'utiliser de l'air extérieur pour l'introduire dans l'habitacle au niveau des buses de dégivrage situées à proximité du pare-brise, après chauffage au travers du dispositif de chauffage, ventilation et/ou climatisation, et à l'inverse, d'utiliser de l'air de recyclage pour le rejeter dans l'habitacle au niveau des buses de pieds. Afin de garantir cette séparation entre les flux d'air extérieur et recyclé tout en pouvant sélectionner ou ajuster au mieux le type d'air à délivrer, on connaît des installations dites « double nappes » également appelées « double layer » en anglais.

L'air extérieur est généralement peu chargé en humidité, lorsqu'il est froid, par comparaison avec l'air de recyclage, mais peut être relativement froid, en particulier en conditions hivernales. Le taux d'humidité de l'air neuf étant relativement faible, le risque de générer de la buée sur le pare-brise est donc également faible.

L'air de recyclage, quant à lui, a généralement un taux d'humidité supérieur à l'air extérieur, et est à une température proche de la température à atteindre, c'est-à-dire proche de la température de consigne définie par exemple par le conducteur ou le passager. De cette manière, même en conditions hivernales, il est possible de réchauffer plus rapidement cet air de recyclage à la température de consigne avant qu'il ne soit rejeté dans l'habitacle. Le confort pour les utilisateurs est grandement amélioré et le risque de générer de la buée sur le pare-brise est faible, cet air de recyclage étant rejeté à distance du pare-brise.

Dans ce cas, il est connu que la chambre de mixage principale alimente en air extérieur neuf les buses de dégivrage, tandis que la chambre de mixage secondaire alimente les buses de sortie vers les pieds à l'avant ainsi que vers les pieds à l'arrière de l'habitacle.

Selon le mode de fonctionnement du dispositif de chauffage, ventilation et/ou climatisation, les buses de sortie, et en particulier la buse de sortie distribuant le flux d'air au niveau des pieds à l'avant du véhicule, ne sont pas forcément alimentées par la même chambre de mixage.

Un dispositif de chauffage, ventilation et/ou climatisation spécifique est donc requis selon le mode de fonctionnement choisi.

Il n'existe pas de dispositif de chauffage, ventilation et/ou climatisation standard permettant à la fois un fonctionnement pour un traitement thermique une-deux zones, ou double nappes dans lequel la région des pieds, qu'il s'agisse de la zone avant ou arrière du véhicule, est alimentée en air par une chambre de mixage différente de celle alimentant les buses de dégivrage, ou encore trois-quatre zones permettant d'alimenter en air de façon distincte l'avant et l'arrière de l'habitacle par deux chambres de mixage différentes. En effet, au moins une partie du boîtier du dispositif de chauffage, ventilation et/ou climatisation doit être réalisée différemment selon qu'il faille traiter le flux d'air à destination d'une ou de plusieurs zones de l'habitacle.

Or, les constructeurs automobiles souhaitent pouvoir transposer de façon simple les dispositifs de chauffage, ventilation et/ou climatisation d'un véhicule à l'autre, notamment d'une gamme de véhicule à une autre.

En outre, actuellement les constructeurs automobiles souhaitent réduire de plus en plus à l'encombrement de ces dispositifs de chauffage, ventilation et/ou climatisation.

### EXPOSE DE L'INVENTION

L'invention a pour objectif de pallier au moins partiellement ces problèmes de l'art antérieur en proposant un dispositif de chauffage, ventilation et/ou climatisation dans le cadre d'un traitement thermique pour une ou plusieurs zones du véhicule qui soit adaptable de façon simple pour différents modes de fonctionnement, notamment une-deux zones, double nappes ou encore trois-quatre zones.

Pour cela, l'invention propose un dispositif de chauffage, ventilation et/ou climatisation pour véhicule automobile, l'habitacle dudit véhicule comportant une zone avant et une zone arrière, selon le sens de marche dudit véhicule, ledit dispositif comprenant un boîtier comportant :
- un conduit de distribution d'un flux d'air au niveau des pieds dans la zone avant dudit véhicule,
- une première chambre de mixage du flux d'air,
- une deuxième chambre de mixage du flux d'air,
- un volet de séparation agencé mobile de manière à isoler ou réunir la première chambre de mixage et la deuxième chambre de mixage,

Selon l'invention,
- le boîtier présente :
   - une première ouverture débouchant dans la première chambre de mixage,
   - une deuxième ouverture débouchant dans la deuxième chambre de mixage, les première et deuxième ouvertures étant agencées de part et d'autre du volet de séparation,
   - une cavité d'assemblage à proximité dudit conduit,
- et ledit dispositif comprend en outre :
   - une cloison apte à obturer la première ouverture ou la deuxième ouverture selon le mode de fonctionnement dudit dispositif, et
   - un module additionnel agencé dans la cavité d'assemblage du boîtier en communication aéraulique avec ledit conduit et avec la première ouverture lorsque la deuxième ouverture est obturée, ou la deuxième ouverture lorsque la première ouverture est obturée, de manière à délimiter sélectivement un canal de circulation du flux d'air entre la première ouverture et ledit conduit, ou entre la deuxième ouverture et ledit conduit.

Ainsi, selon que le dispositif de chauffage, ventilation et/ou climatisation fonctionne selon un mode une-deux zones, double nappes dit « double layer » en anglais, ou encore trois-quatre zones, on agence le module additionnel adéquat sur le boîtier au niveau du conduit de distribution d'un flux d'air dans la région des pieds de la zone avant dudit véhicule, appelé conduit de sortie pieds avant, de manière à permettre d'alimenter le conduit de sortie pieds avant sélectivement par la première chambre de mixage ou par la deuxième chambre de mixage lorsque ces deux chambres de mixage sont indépendantes, ou par les deux chambres de mixage lorsqu'elles sont dépendantes. Ceci permet de faciliter l'adaptation du dispositif selon les demandes des constructeurs automobiles notamment.

Il suffit dans ce cas d'adapter au moins en partie la face du boîtier recevant le module additionnel, le reste du boîtier reste inchangé et peut donc être standardisé.

Notamment, cette face du boîtier recevant le module additionnel peut présenter dans un mode, l'une ou l'autre des ouvertures débouchant dans une chambre de mixage associée, tandis que dans un autre mode, cette ouverture est obturée par une cloison, par exemple une cloison du boîtier ou du module additionnel approprié.

Ledit dispositif peut en outre comporter une ou plusieurs caractéristiques suivantes, prises séparément ou en combinaison :
- les première et deuxième ouvertures sont agencées de part et d'autre du volet de séparation selon un axe vertical à l'état monté dans ledit véhicule ;
- le module additionnel présente une forme complémentaire de la forme de la cavité d'assemblage ;
- le boîtier comporte deux faces d'extrémité selon un axe longitudinal confondu avec l'axe longitudinal dudit véhicule à l'état monté dudit dispositif dans ledit véhicule, et le module additionnel est agencé au niveau d'une face d'extrémité longitudinale du boîtier ;
- le module additionnel est monté sur une face du boitier et la cloison obturant la première ouverture ou la deuxième ouverture selon le mode de fonctionnement dudit dispositif, est une cloison de la face du boîtier destinée à recevoir le module additionnel ;
- la cloison obturant la première ouverture ou la deuxième ouverture selon le mode de fonctionnement dudit dispositif, est prévue sur le module additionnel ;
- le boîtier présente une cloison obturant la première ouverture et un module additionnel pour un mode une-deux zones ou double nappes est assemblé au boîtier de manière à délimiter un canal de circulation du flux d'air entre la deuxième ouverture et ledit conduit, de sorte que ledit conduit est mis en communication avec la deuxième chambre de mixage via la deuxième ouverture, de manière à pouvoir être alimenté par la deuxième chambre de mixage et le flux d'air est apte à circuler en-dessous du volet de séparation ;
- le module additionnel pour un mode une-deux zones ou double nappes comporte une paroi de fermeture obturant l'entrée de la cavité d'assemblage ;
- la paroi de fermeture présente une forme complémentaire de la forme de l'entrée de la cavité d'assemblage et présente au moins une portion sensiblement plane ;
- ledit dispositif comprend un module additionnel pour un mode trois-quatre zones assemblé au boîtier ;
- le module additionnel pour un mode trois-quatre zones comporte d'une part une paroi externe délimitant le canal de circulation du flux d'air qui met en communication la première ouverture du boîtier avec ledit conduit et d'autre part une paroi interne formant cloison d'obturation de la deuxième ouverture du boîtier, de sorte que ledit conduit peut être alimenté par la première zone de mixage et le flux d'air est apte à circuler au-dessus du volet de séparation ;
- le canal de circulation du flux d'air met en communication la première ouverture du boîtier avec ledit conduit via la cavité d'assemblage ;
- le module additionnel pour un mode trois-quatre zones comprend une ouverture destinée à être agencée en communication aéraulique avec la première ouverture du boîtier ;
- le module additionnel pour un mode trois-quatre zones est monté sur une face du boitier et la paroi externe du module additionnel pour un mode trois-quatre zones comprend une première partie s'étendant selon une courbure et une deuxième partie s'étendant de façon sensiblement parallèle à la face du boîtier portant ledit module additionnel ;
- le module additionnel présente un point d'inflexion à l'intersection de la première partie et de la deuxième partie de la paroi externe du module additionnel pour un mode trois-quatre zones ;
- la première partie de la paroi externe du module additionnel pour un mode trois-quatre zones est sensiblement bombée ou convexe avec une convexité orientée vers l'extérieur du module additionnel pour un mode trois-quatre zones ;
- le module additionnel pour un mode trois-quatre zones comprend un volet agencé mobile dans le canal de circulation du flux d'air ;
- ledit dispositif comprend au moins un échangeur thermique, tel qu'un radiateur, agencé en amont du volet de séparation selon le sens d'écoulement du flux d'air, de sorte que chaque chambre de mixage peut recevoir un flux d'air ayant traversé ledit au moins un échangeur thermique ; et
- ledit dispositif comprend un premier chemin de contournement dudit au moins un échangeur thermique débouchant dans la première chambre de mixage et un deuxième chemin de contournement dudit au moins un échangeur thermique, agencé à distance du premier chemin de contournement, et débouchant dans la deuxième chambre de mixage, lesdits premier et deuxième chemins de contournements étant agencés de part et d'autre dudit au moins un échangeur thermique, de sorte que chaque chambre de mixage peut recevoir un flux d'air ayant contourné ledit au moins un échangeur thermique.

L'invention concerne également un module additionnel pour un tel dispositif.

Selon un aspect de l'invention, il s'agit d'un module additionnel pour un mode une-deux zones ou double nappes apte à délimiter un canal de circulation du flux d'air entre la deuxième ouverture du boîtier dudit dispositif en-dessous du volet de séparation selon un axe vertical à l'état monté dudit dispositif dans ledit véhicule, et ledit conduit.

Ledit module additionnel comporte une paroi de fermeture apte à obturer une entrée d'une cavité d'assemblage prévue sur le boîtier pour recevoir ledit module additionnel, l'entrée de la cavité d'assemblage étant par exemple située en-dessous du volet de séparation selon l'axe vertical dudit dispositif.

Selon un autre aspect de l'invention, il s'agit d'un module additionnel pour un mode trois-quatre zones, apte à délimiter un canal de circulation du flux d'air entre la première ouverture du boîtier dudit dispositif au-dessus du volet de séparation selon un axe vertical à l'état monté dudit dispositif dans ledit véhicule, et ledit conduit.

Ledit module additionnel comporte :
- une paroi externe apte à délimiter ledit canal de circulation du flux d'air,
- une ouverture destinée à être agencée en communication aéraulique avec la première ouverture du boîtier, et
- une paroi interne formant cloison d'obturation de la deuxième ouverture du boîtier.

L'ouverture dudit module additionnel pour un mode trois-quatre zones, est destinée à être agencée au-dessus du volet de séparation selon l'axe vertical dudit dispositif à l'état monté dans ledit véhicule.

Ledit module additionnel pour un mode trois-quatre zones présente au moins partiellement une forme complémentaire de l'axe du volet de séparation.

Le module additionnel selon l'un ou l'autre mode de réalisation peut comporter un nombre prédéfini de parois latérales conformées pour délimiter des sous-conduits d'au moins un conduit du boîtier, tel que le conduit de distribution d'un flux d'air au niveau des pieds dans la zone avant dudit véhicule.

Le module additionnel selon l'un ou l'autre mode de réalisation peut former un support d'axe d'au moins un volet agencé dans au moins un conduit du boîtier, tel que le conduit de distribution d'un flux d'air au niveau des pieds dans la zone avant dudit véhicule. L'invention concerne encore un procédé d'assemblage d'un dispositif de chauffage, ventilation et/ou climatisation tel que défini précédemment, pour véhicule automobile, l'habitacle dudit véhicule comportant une zone avant et une zone arrière selon le sens de marche dudit véhicule.

Selon l'invention ledit procédé comprend les étapes suivantes :
- assemblage d'un boîtier définissant un conduit de distribution d'un flux d'air au niveau des pieds dans la zone avant dudit véhicule, une première chambre de mixage du flux d'air, une deuxième chambre de mixage du flux d'air, une première ouverture débouchant dans la première chambre de mixage, une deuxième ouverture débouchant dans la deuxième chambre de mixage, et une cavité d'assemblage à proximité dudit conduit,
- agencement d'un volet de séparation mobile dans le boîtier et entre la première chambre de mixage et la deuxième chambre de mixage, de manière à pouvoir isoler ou réunir la première chambre de mixage et la deuxième chambre de mixage selon la position du volet de séparation,
   et en outre
- une étape d'insertion et d'assemblage d'un module additionnel pour un mode trois-quatre zones dans la cavité d'assemblage du boîtier en communication aéraulique avec ledit conduit et la première ouverture, de manière à délimiter un canal de circulation du flux d'air entre la première ouverture et ledit conduit, ou
- une étape d'insertion et d'assemblage d'un module additionnel pour un mode une-deux zones ou double nappes dans la cavité d'assemblage du boîtier en communication aéraulique avec ledit conduit et la deuxième ouverture, de manière à délimiter un canal de circulation du flux d'air entre la deuxième ouverture et ledit conduit et une étape d'assemblage d'une cloison d'obturation de la première ouverture.

### BREVE DESCRIPTION DES FIGURES

D'autres caractéristiques et avantages de l'invention ressortiront à la lecture de la description qui suit, en référence aux figures annexées, parmi lesquelles :
- la figure 1 représente de façon schématique une partie d'une installation de chauffage, de ventilation et/ou de climatisation comportant un dispositif de chauffage, ventilation et/ou climatisation comprenant un module additionnel pour un mode de fonctionnement une-deux zones ou double nappes, ou un module additionnel pour un mode de fonctionnement trois-quatre zones,
- la figure 2a est une vue de profil en coupe du dispositif de chauffage, ventilation et/ou climatisation comprenant un module additionnel pour un mode de fonctionnement une-deux zones ;
- la figure 2b est une vue en coupe agrandie d'une portion du dispositif de chauffage, ventilation et/ou climatisation de la figure 2a,
- la figure 3a est une vue en perspective d'une portion du dispositif de chauffage, ventilation et/ou climatisation de la figure 2a montrant plus en détail le module additionnel pour un mode de fonctionnement une-deux zones ou double nappes ;
- la figure 3b est une première vue en perspective du module additionnel pour un mode de fonctionnement une-deux zones ou double nappes ;
- la figure 3c est une deuxième vue en perspective du module additionnel pour un mode de fonctionnement une-deux zones ou double nappes ;
- la figure 4 est une vue en coupe partielle du dispositif de chauffage, ventilation et/ou climatisation dans un mode de fonctionnement double nappes ;
- la figure 5a est une vue de profil d'une portion du dispositif de chauffage, ventilation et/ou climatisation comprenant un module additionnel pour un mode de fonctionnement trois-quatre zones ;
- la figure 5b est une vue en perspective d'une portion du dispositif de chauffage, ventilation et/ou climatisation de la figure 5a montrant plus en détail le module additionnel pour un mode de fonctionnement trois-quatre zones ;
- la figure 5c est une première vue en perspective du module additionnel pour un mode de fonctionnement trois-quatre zones ; et
- la figure 5d est une deuxième vue en perspective du module additionnel pour un mode de fonctionnement trois-quatre zones.

Sur ces figures, les éléments identiques portent les mêmes références.

### DESCRIPTION DETAILLEE DES MODES DE REALISATION

Les réalisations suivantes sont des exemples donnés à titre d'illustration de l'objet de l'invention. L'invention n'est pas limitée à ces modes de réalisation. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la description on peut indexer certains éléments, autrement dit on peut par exemple mentionner un premier élément ou un deuxième élément. Dans ce cas, il s'agit d'un simple indexage pour différencier et dénommer des éléments proches mais non identiques. Cet indexage n'implique pas une priorité d'un élément, par rapport à un autre. On peut aisément inter-changer de telles dénominations sans sortir du cadre de la présente invention.

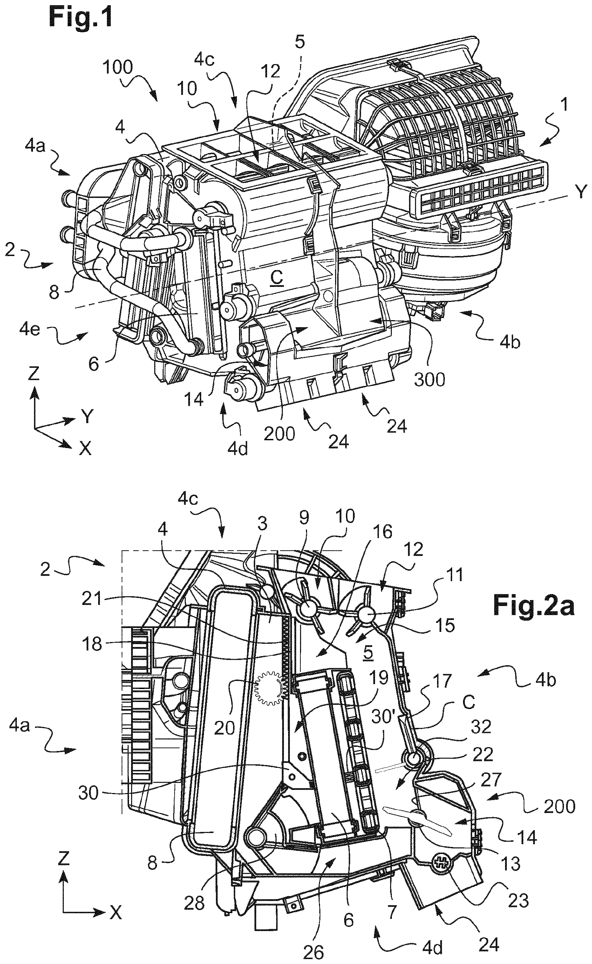

On a représenté en partie sur la figure 1 une installation de chauffage, de ventilation et/ou de climatisation 100 comprenant un boîtier d'entrée d'air 1 et un dispositif 2 de chauffage, ventilation et/ou climatisation apte à traiter thermiquement le flux d'air en provenance du boîtier d'entrée d'air 1.

Le dispositif 2 de chauffage, ventilation et/ou climatisation est adapté pour toute architecture connue à savoir centrée ou semi-centrée. Une architecture centrée correspond à une installation de chauffage, ventilation et/ou climatisation 100 dont le boîtier d'entrée d'air 1 (partie du boîtier comprenant le pulseur) et le boîtier principal du dispositif 2 de chauffage, ventilation et/ou climatisation, comprenant notamment des moyens d'échange thermique, sont agencés dans un même plan longitudinal. Une architecture semi-centrée correspond à une installation de chauffage, ventilation et/ou climatisation 100 dont le boîtier 1 d'entrée d'air et le boîtier principal du dispositif 2 de chauffage, ventilation et/ou climatisation ne sont pas agencés dans un même plan longitudinal, le boîtier d'entrée d'air étant agencé latéralement au boîtier principal.

### Dispositif 2 de chauffage, ventilation et/ou climatisation

L'invention concerne le dispositif 2 de chauffage, ventilation et/ou climatisation mieux visible sur la figure 2a, comprenant un canal 3 d'écoulement d'un flux d'air, défini par un boîtier 4.

On a schématisé sur la figure 2a, un axe longitudinal X du dispositif 2 de chauffage, ventilation et/ou climatisation qui correspond à l'axe longitudinal avant/arrière du véhicule qui est un axe horizontal, et un axe Z perpendiculaire à l'axe X, correspondant à l'axe vertical haut/bas du véhicule. Dans la présente, par haut et bas, ou avant et arrière, on se réfère à la disposition des éléments sur les figures, qui correspond à la disposition des éléments à l'état monté dans le véhicule et au sens de marche du véhicule.

Le boîtier 4 présente ici deux faces d'extrémité 4a, 4b longitudinales opposées selon l'axe X et deux faces opposées supérieure 4c et inférieure 4d selon l'axe Z, reliant deux faces latérales 4e opposées selon un axe Y transversal perpendiculaire au plan XZ.

Selon le mode de réalisation décrit, le boîtier 4 du dispositif 2 de chauffage, ventilation et/ou climatisation peut comprendre de plus une cloison de séparation interne 5 agencée de manière à séparer le boîtier 4 en deux moitiés, avantageusement égales.

En référence à la figure 2a, la cloison de séparation interne 5 s'étend selon un plan médian parallèle au plan XZ. Ainsi, lorsque le dispositif 2 de chauffage, ventilation et/ou climatisation est implanté dans le véhicule, la cloison de séparation interne 5 se situe sensiblement en position verticale et dans l'axe longitudinal du véhicule.

Cette cloison de séparation interne 5 permet une distinction entre un flux d'air à destination d'une partie gauche de l'habitacle et un flux d'air à destination d'une partie droite de l'habitacle.

La cloison de séparation interne 5 sépare également en deux les composants du dispositif 2 de chauffage, ventilation et/ou climatisation logés dans le boîtier 4.

Le dispositif 2 de chauffage, ventilation et/ou climatisation comprend de plus un module additionnel 200 pour un mode une-deux zones ou double nappes, ou un module additionnel 300 pour un mode trois-quatre zones agencé sur le boîtier 4, ici sur une face d'extrémité longitudinale 4b du boîtier 4. Afin de faciliter la lecture, ces modules additionnels 200 et 300, décrits plus en détail par la suite, sont nommés respectivement premier module additionnel 200 et deuxième module additionnel 300.

Le boîtier 4 présente une cavité d'assemblage (non visible sur les figures) configurée pour recevoir sélectivement le premier module additionnel 200 ou le deuxième module additionnel 300 lors de l'assemblage.

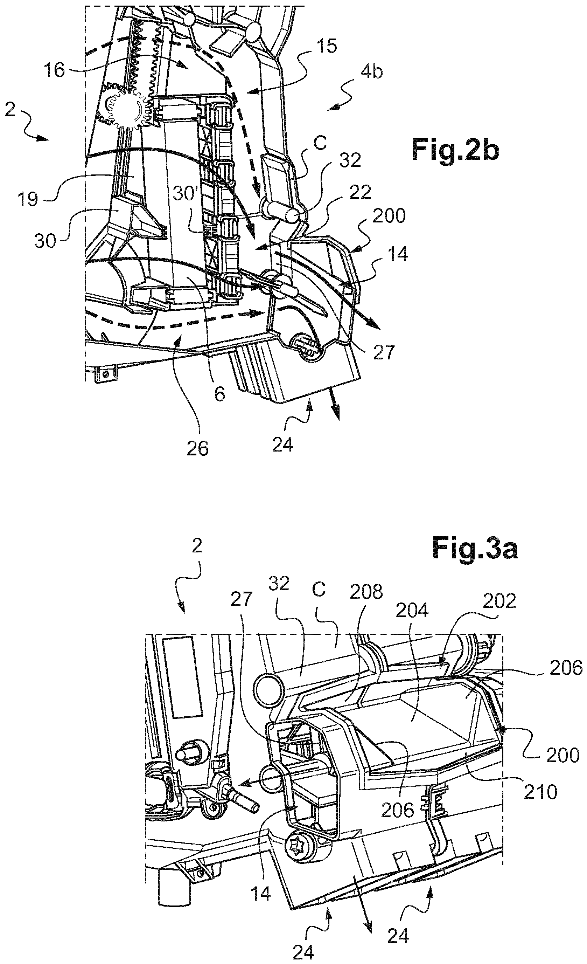

Les figures 2a, 2b illustrent un dispositif 2 de chauffage, ventilation et/ou climatisation recevant le premier module additionnel 200 mieux visible sur les figures 3a à 3c et apte à fonctionner pour un traitement thermique une-deux zones.

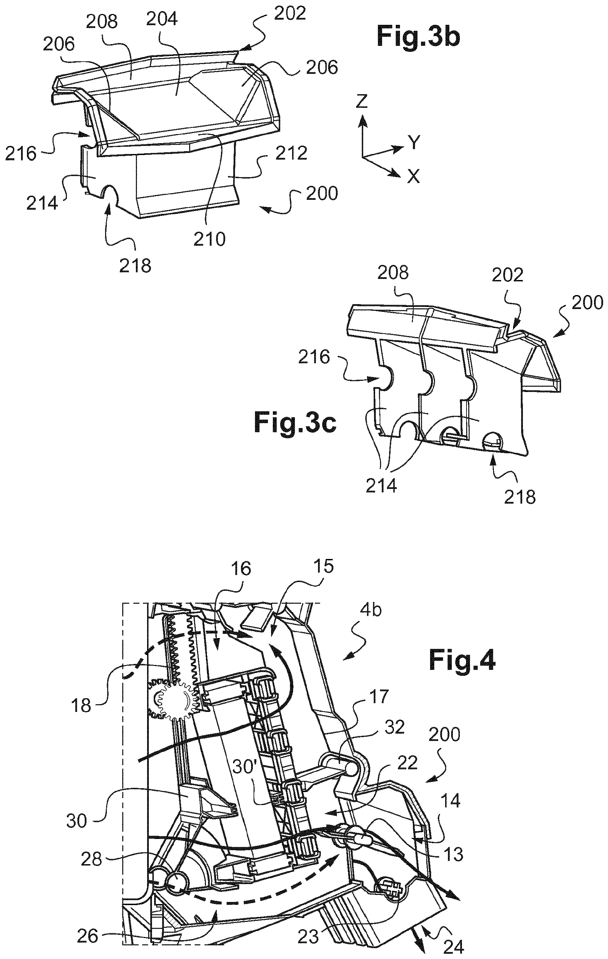

La figure 4 illustre un dispositif 2 de chauffage, ventilation et/ou climatisation recevant également le premier module additionnel 200 et apte à fonctionner pour un traitement thermique double nappes.

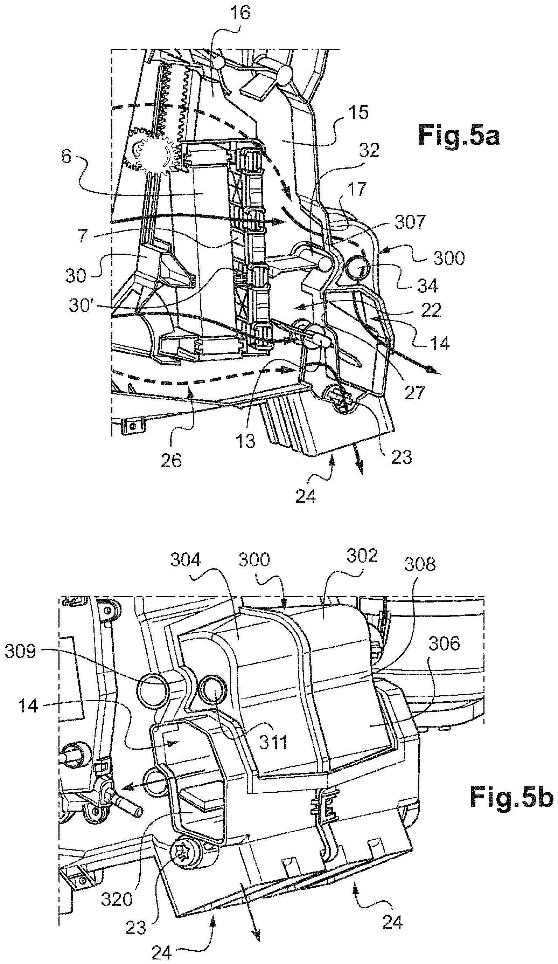

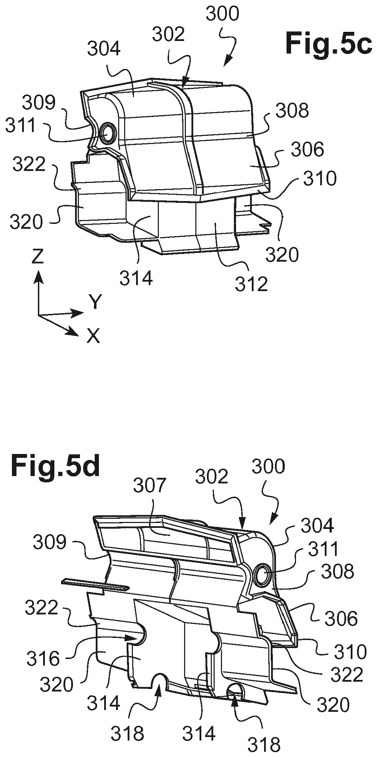

Enfin, les figures 5a et 5b illustrent un dispositif 2 de chauffage, ventilation et/ou climatisation recevant le deuxième module additionnel 300 mieux visible sur les figures 5c et 5d.

### Moyens de traitement thermique et distribution du flux d'air dans l'habitacle

### Moyens de traitement thermique du flux d'air à destination de l'habitacle

Par ailleurs, en se référant de nouveau aux figures 1 et 2a, un ou plusieurs moyens de traitement thermique 6, 7, 8 du flux d'air destiné à être distribué dans l'habitacle sont agencés dans le boîtier 4 du dispositif 2 de chauffage, ventilation et/ou climatisation.

Selon le mode de réalisation illustré, les moyens de traitement thermique comprennent un premier échangeur thermique 6, par exemple un radiateur, destiné à réchauffer au moins une partie du flux d'air circulant dans le dispositif 2 de chauffage, ventilation et/ou climatisation. Dans l'exemple illustré, le premier échangeur thermique 6 présente une forme générale sensiblement parallélépipédique. De plus, le premier échangeur thermique 6 est par exemple agencé dans le canal 3 d'écoulement du flux d'air de sorte que sa hauteur s'étende selon une direction sensiblement inclinée par rapport à l'axe vertical Z. Dans cet exemple, le premier échangeur thermique 6 ne s'étend pas sur toute la hauteur du canal 3 d'écoulement.

Le premier échangeur thermique 6 peut éventuellement être couplé à un radiateur électrique 7 additionnel destiné à réchauffer le flux d'air de manière plus rapide, notamment dans le cas d'un démarrage du véhicule. Le radiateur électrique 7 s'étend avantageusement sensiblement parallèlement au premier échangeur thermique 6. Le radiateur électrique 7 présente ici sensiblement la même hauteur que le premier échangeur thermique 6 et ne s'étend donc pas non plus sur toute la hauteur du canal 3 d'écoulement.

Les moyens de traitement thermique peuvent comprendre également un deuxième échangeur thermique 8, par exemple un évaporateur, agencé en amont du premier échangeur thermique 6 selon le sens d'écoulement du flux d'air. Le deuxième échangeur thermique 8 est agencé de façon à refroidir et déshumidifier l'intégralité du flux d'air circulant dans le dispositif 2 de chauffage, ventilation et/ou climatisation.

Selon l'exemple illustré, le deuxième échangeur thermique 8 présente une forme générale sensiblement parallélépipédique. De plus, le deuxième échangeur thermique 8 est agencé de sorte que sa hauteur s'étende selon une direction sensiblement parallèle à l'axe vertical Z.

Les premier et deuxième échangeurs thermiques 6, 8 peuvent être agencés de manière sensiblement parallèle. En variante, les échangeurs thermiques 6, 8 peuvent être légèrement inclinés l'un par rapport à l'autre de manière à former un V, tel qu'illustré sur la figure 2a. Cet agencement contribue à la compacité du dispositif 2 de chauffage, ventilation et/ou climatisation.

### Distribution du flux d'air traité dans l'habitacle

Le flux d'air est introduit dans le boîtier 4 et après avoir été traité thermiquement par au moins un échangeur thermique, ici par l'évaporateur 8 et éventuellement le ou les radiateurs 6 et 7 (figure 2a), le flux d'air est dirigé vers une ou plusieurs sorties.

La sortie ou chaque sortie comprend un ou plusieurs conduits distribuant les flux d'air vers des buses débouchant dans l'habitacle.

Selon l'exemple illustré sur les figures, le dispositif 2 de chauffage, ventilation et/ou climatisation comprend notamment :
- un conduit 10 de distribution du flux d'air pour la buse de dégivrage permettant de désembuer le pare-brise,
- un conduit 12 de distribution du flux d'air vers une ou plusieurs buses de ventilation latérales/centrales permettant de refroidir/réchauffer les passagers à l'avant du véhicule, et
- un conduit 14 de distribution du flux d'air vers une buse de sortie au niveau de pieds à l'avant de l'habitacle permettant de réchauffer les pieds des passagers à l'avant du véhicule. Par souci de clarté, ce conduit 14 est appelé par la suite conduit 14 de sortie pieds avant.

Ces conduits 10, 12, 14 alimentent en air traité la zone avant de l'habitacle.

Selon le mode de réalisation illustré, le dispositif 2 de chauffage, ventilation et/ou climatisation, comprend également un ou plusieurs conduits 24 destiné(s) à alimenter en air traité la zone arrière de l'habitacle, par exemple pour orienter le flux d'air vers une buse de sortie au niveau des pieds à l'arrière de l'habitacle permettant de réchauffer les pieds des passagers à l'arrière du véhicule et/ou vers une ou plusieurs buses de ventilation à l'arrière du véhicule.

Chacun de ces conduits 10, 12, 14, 24 peut être subdivisé en sous-conduits, notamment de manière à alimenter des parties droite et gauche de la zone appropriée de l'habitacle, comme on le remarque sur la figure 1.

De plus, le dispositif 2 de chauffage, ventilation et/ou climatisation selon l'invention peut comprendre des volets 9, 11, 13 (cf. figure 2a) respectivement agencés dans les conduits 10, 12, 14 permettant de contrôler / bloquer l'accès des flux d'air aux différentes buses débouchant dans la zone avant de l'habitacle.

On peut également prévoir un ou plusieurs volets 23 agencés dans le ou chaque conduit 24 permettant de contrôler / bloquer l'accès des flux d'air aux différentes buses débouchant dans la zone arrière de l'habitacle.

### Architecture du boîtier 4

### Partie supérieure du boîtier 4 du dispositif 2 de chauffage, ventilation et/ou climatisation

Afin de pouvoir distribuer les flux d'air vers les buses de sortie aux températures souhaitées, le dispositif 2 de chauffage, ventilation et climatisation comprend une première chambre de mixage 15 du flux d'air. Un flux d'air chaud et un flux d'air froid, issus respectivement des échangeurs thermiques 6 et 8, peuvent être mélangés dans la première chambre de mixage 15 dans des proportions variables puis acheminés vers les buses de sortie débouchant dans l'habitacle.

La première chambre de mixage 15 est selon le mode de réalisation décrit dans une zone supérieure ou haute du boîtier 4 selon l'axe vertical Z.

Pour garantir que le flux d'air froid, issu du deuxième échangeur thermique 8, dans cet exemple un évaporateur, ne soit pas thermiquement contaminé par le premier échangeur thermique 6, dans cet exemple un radiateur, le dispositif 2 de chauffage, ventilation et/ou climatisation comprend avantageusement un premier chemin de contournement 16 du premier échangeur thermique 6. Ainsi, le flux d'air froid, ayant traversé le deuxième échangeur thermique 8, peut circuler soit à travers le premier échangeur thermique 6 pour être réchauffé, soit contourner le premier échangeur thermique 6 par le premier chemin de contournement 16 pour conserver sa température.

Les deux flux d'air chaud et froid sont orientés en direction de la première chambre de mixage 15 pour y être mélangés et distribués vers les buses de sortie aux températures consignées.

En se référant à la figure 2b, le flux d'air froid, ayant traversé le deuxième échangeur thermique 8, peut circuler à travers le premier échangeur thermique 6 tel que schématisé par les flèches en traits pleins, et/ou contourner le premier échangeur thermique 6 par le premier chemin de contournement 16 tel que schématisé par les flèches en tirets.

En outre, le boîtier 4 présente au niveau d'une face du boîtier 4, ici une face d'extrémité longitudinale 4b, une première ouverture 17 débouchant dans la première chambre de mixage 15. Cette première ouverture 17 est donc agencée en aval de la première chambre de mixage 15 et du premier chemin de contournement 16 lorsqu'il est prévu, selon le sens d'écoulement du flux d'air.

Cette première ouverture 17 est destinée à être obturée ou non selon le mode de fonctionnement choisi du dispositif 2 de chauffage, ventilation et/ou climatisation.

La première ouverture 17 est obturée sur la partie gauche de la figure 1 et sur les modes de réalisation des figures 2a à 4. Cette première ouverture 17 peut être obturée par une cloison Ç du boîtier 4, ici par une cloison Ç de la face d'extrémité longitudinale 4b du boîtier 4 recevant le premier module additionnel 200. Cette cloison Ç peut être réalisée d'une seule pièce avec la face d'extrémité longitudinale 4b.

Au contraire, cette première ouverture 17 n'est pas obturée dans le mode de réalisation des figures 5a et 5b de manière à pouvoir mettre en communication la première chambre de mixage 15 avec le conduit 14 de sortie pieds avant. Ainsi, le flux d'air en provenance de la première chambre de mixage 15 peut circuler vers le conduit 14 de sortie pieds avant en passant par la première ouverture 17 et un canal de circulation d'air défini par le deuxième module additionnel 300 tel que détaillé par la suite.

Par ailleurs, en se référant de nouveau à la figure 2a, le dispositif 2 de chauffage, ventilation et/ou climatisation peut comprendre en outre un premier volet 18 permettant de réguler la proportion de flux d'air froid passant par le premier échangeur thermique 6 et la proportion de flux d'air froid passant par le premier chemin de contournement 16.

Tel qu'illustré sur la figure 2a, le premier volet 18 est agencé en amont du premier échangeur thermique 6, et en aval du deuxième échangeur thermique 8, selon le sens d'écoulement du flux d'air. Il est possible, selon un mode de réalisation non représenté, d'agencer le premier volet 18 en aval du premier échangeur thermique 6 selon le sens d'écoulement du flux d'air. Le premier volet 18 est monté mobile entre deux positions extrêmes :
- une position dans laquelle il bloque l'accès du flux d'air, qui est dans cet exemple un flux d'air froid en sortie de l'évaporateur 8, au premier chemin de contournement 16 et
- une position dans laquelle il bloque l'accès du flux d'air froid en sortie de l'évaporateur 8, au premier échangeur thermique 6.

Bien entendu, le premier volet 18 peut prendre toute position intermédiaire.

Ainsi, selon le positionnement du premier volet 18, le flux d'air froid issu du deuxième échangeur thermique 8 est orienté, dans des proportions variables, vers le premier échangeur thermique 6 et/ou directement vers la première chambre de mixage 15, puis vers les conduits 10, 12, 14.

Le premier volet 18 est par exemple de type coulissant. Plus précisément, il s'agit avantageusement d'un volet plan et de type coulissant. En référence à la figure 2a, le premier volet 18 est agencé en s'étendant longitudinalement selon l'axe Z. Plus précisément, le premier volet 18 coulisse selon l'axe Z. Selon le mode de réalisation illustré, le premier volet 18 comprend une porte 21 sur laquelle est agencée une crémaillère. Afin de mettre le premier volet 18 en mouvement, un engrenage 20 complémentaire à la crémaillère est mis en rotation, par un actionneur non illustré, autour d'un axe transversal sensiblement perpendiculaire au plan XZ, sensiblement parallèle à l'axe Y schématisé sur la figure 1. La rotation de l'engrenage 20 entraîne le mouvement en translation de la porte 21 entre les deux positions extrêmes du premier volet 18.

L'accès du flux d'air froid au premier échangeur thermique 6, est par exemple réalisé par l'intermédiaire d'un premier couloir 19 correspondant à une portion du canal 3 d'écoulement d'un flux d'air situé entre un élément de séparation 30, qui sera décrit ultérieurement, et le premier échangeur thermique 6.

Un tel boîtier 4 peut être utilisé pour un dispositif 2 de chauffage, ventilation et/ou climatisation adapté pour un traitement thermique homogène où les différentes zones du véhicule sont aérées à une même température, on parle alors de dispositif de chauffage, ventilation et/ou climatisation mono-zone ou une zone.

Un tel boîtier 4 peut également être utilisé pour un dispositif 2 de chauffage, ventilation et/ou climatisation permettant d'avoir une distinction de température entre les parties gauche et droite de l'habitacle. Il s'agit alors d'un fonctionnement en mode bizones ou deux zones permettant un réglage séparé du flux d'air sortant respectivement au niveau des places à gauche et à droite de l'habitacle. Dans ce cas, on peut prévoir des volets à commande indépendante dans chaque partie gauche droite du dispositif 2 de chauffage, ventilation et/ou climatisation. Le boîtier 4 nécessite dans ce cas la cloison de séparation interne 5 décrite précédemment.

### Partie inférieure du boîtier 4 du dispositif 2 de chauffage, ventilation et/ou climatisation

En complément, il peut être avantageux d'avoir en outre une distinction entre les zones avant et arrière de l'habitacle. Il s'agit alors d'un fonctionnement en mode trois-quatre zones, permettant une distinction avant arrière, ainsi qu'une distinction entre les parties droite et gauche de la zone avant, et/ou entre les parties droite et gauche de la zone arrière.

Pour un fonctionnement trois-quatre zones, le boîtier 4 nécessite également la cloison de séparation interne 5.

Selon un autre exemple, il peut être avantageux de distinguer la circulation d'un flux d'air extérieur dit neuf et d'un flux d'air recyclé en provenance de l'habitacle. En effet, le flux d'air extérieur moins chargé en humidité que le flux d'air recyclé peut être soufflé dans l'habitacle au niveau des buses de dégivrage situées à proximité du pare-brise, après chauffage au travers du dispositif 2 de chauffage, ventilation et/ou climatisation par exemple, tandis que le flux d'air de recyclage en provenance de l'habitacle, qui peut notamment être chauffé plus rapidement, peut être soufflé à travers les buses au niveau des pieds à distance du pare-brise, qu'il s'agisse de la région des pieds à l'avant ou à l'arrière de l'habitacle.

Le taux d'humidité du flux d'air neuf étant relativement faible, le risque de générer de la buée sur le pare-brise est donc également faible. A l'inverse, le flux d'air de recyclage pouvant être réchauffé plus rapidement à la température de consigne, le confort pour les utilisateurs est grandement amélioré.

Il s'agit d'un mode double nappes appelé « double layer » en anglais.

Ainsi, afin de permettre notamment le fonctionnement du dispositif de chauffage, ventilation et/ou climatisation selon les modes trois-quatre zones ou encore double nappes ou dual layer, le dispositif 2 de chauffage, ventilation et/ou climatisation comprend une deuxième chambre de mixage 22.

Selon le mode de réalisation décrit, la deuxième chambre de mixage 22 est située dans une partie inférieure ou basse du boîtier 4 selon l'axe vertical Z, par opposition à la première chambre de mixage 15 qui se trouve dans une partie supérieure ou haute du boîtier 4 selon l'axe vertical Z.

De manière analogue à la première chambre de mixage 15, la deuxième chambre de mixage 22 permet aux flux d'air chaud et froid, issus respectivement des échangeurs thermiques 6 et 8, d'être mélangés dans des proportions variables puis acheminés vers au moins une buse débouchant dans la zone de l'habitacle appropriée par l'intermédiaire d'au moins un conduit 24.

Tout comme pour la première chambre de mixage 15, pour garantir que le flux d'air froid, issu du deuxième échangeur thermique 8, ne soit pas thermiquement contaminé par le premier échangeur thermique 6, le dispositif 2 de chauffage, ventilation et/ou climatisation comprend avantageusement un deuxième chemin de contournement 26 du premier échangeur thermique 6. Le deuxième chemin de contournement 26 est ici agencé à distance du premier chemin de contournement 16. Les deux chemins de contournement 16 et 26 sont selon l'exemple illustré agencés de part et d'autre du premier échangeur thermique 6, suivant l'axe vertical Z.

Ainsi, le flux d'air froid, ayant traversé le deuxième échangeur thermique 8, circule soit à travers le premier échangeur thermique 6 pour être réchauffé, soit contourne le premier échangeur thermique 6 par le deuxième chemin de contournement 26 pour conserver sa température basse. Les deux flux d'air chaud et froid sont orientés en direction de la deuxième chambre de mixage 22 pour y être mélangés et distribués vers les buses de sortie de la zone du véhicule appropriée aux températures consignées.

En outre, le boîtier 4 présente au niveau de sa face d'extrémité longitudinale 4b une deuxième ouverture 27. Il s'agit ici de la même face d'extrémité longitudinale 4b du boîtier 4 présentant la première ouverture 17 débouchant dans la première chambre de mixage 15.

La deuxième ouverture 27 débouche dans la deuxième chambre de mixage 22. Cette deuxième ouverture 27 est donc agencée en aval de la deuxième chambre de mixage 22 et du deuxième chemin de contournement 26 lorsqu'il est prévu, selon le sens d'écoulement du flux d'air.

La deuxième ouverture 27 est dans cet exemple agencée sur le boîtier 4 de manière à déboucher dans la cavité d'assemblage qui est en communication aéraulique avec le conduit 14 de sortie pieds avant.

La deuxième ouverture 27 n'est pas obturée sur les modes de réalisation des figures 2a à 4, et permet de mettre en communication la deuxième chambre de mixage 22 avec le conduit 14 de sortie pieds avant. Au contraire, cette deuxième ouverture 27 est obturée dans le mode de réalisation des figures 5a et 5b. Cette deuxième ouverture 27 peut être obturée par une cloison prévue sur le deuxième module additionnel 300 pour un mode trois-quatre zones tel que détaillé par la suite.

Selon le mode de fonctionnement choisi du dispositif 2 de chauffage, ventilation et/ou climatisation, c'est la première ouverture 17 ou la deuxième ouverture 27 qui est obturée tandis que l'autre reste libre de façon à permettre la mise en communication du conduit 14 de sortie pieds avant avec l'une ou l'autre chambre de mixage 15 ou 22 associée.

Par ailleurs, afin de réaliser un mélange dans des proportions variables, le dispositif 2 de chauffage, ventilation et/ou climatisation peut comprendre un deuxième volet 28 permettant de réguler la proportion de flux d'air froid passant par le premier échangeur thermique 6 et la proportion de flux d'air froid passant par le deuxième chemin de contournement 26.

Le deuxième volet 28 est avantageusement agencé du même côté du premier échangeur thermique 6 que le premier volet 18. Tel qu'illustré sur la figure 2a, le deuxième volet 28 est agencé en amont du premier échangeur thermique 6, et en aval du deuxième échangeur thermique 8, selon le sens d'écoulement du flux d'air. Il est possible, selon un mode de réalisation non représenté, d'agencer le deuxième volet 28 en aval du premier échangeur thermique 6 selon le sens d'écoulement du flux d'air.

Le deuxième volet 28 est mobile entre deux positions extrêmes, une position dans laquelle il bloque l'accès du flux d'air froid au deuxième chemin de contournement 26 et une position dans laquelle il bloque l'accès du flux d'air froid au premier échangeur thermique 6. Bien entendu, le deuxième volet 28 peut prendre toute position intermédiaire.

Selon un premier exemple de réalisation, le deuxième volet 28 peut être d'un type différent que le premier volet 18.

Il peut s'agir par exemple d'un volet tambour. Bien évidemment, tout autre type de volet tel qu'un volet drapeau ou papillon convient. Dans ce cas, afin de mettre le deuxième volet 28 en mouvement, un actionneur non illustré est apte à mettre en rotation le deuxième volet 28 autour d'un axe transversal sensiblement parallèle à l'axe Y schématisé sur la figure 1, entre les deux positions extrêmes du deuxième volet 28.

Selon une variante non illustrée, le deuxième volet 28 peut être du même type que le premier volet 18, par exemple de type plan et coulissant.

Bien entendu dans ce cas, de façon similaire au premier volet 18 coulissant, le deuxième volet 28 coulissant peut comprendre une porte sur laquelle est agencée une crémaillère (non représentée). Afin de mettre le deuxième volet 28 en mouvement, un engrenage (non illustré) complémentaire à la crémaillère peut être mis en rotation, par un actionneur non illustré, autour d'un axe transversal sensiblement perpendiculaire au plan XZ sensiblement parallèlement à l'axe Y schématisé sur la figure 1. La rotation de l'engrenage entraîne le mouvement en translation de la porte entre les deux positions extrêmes. Les deux volets 18, 28 étant de type coulissant, ils requièrent peu d'espace. Ils peuvent être agencés sensiblement parallèlement à l'axe vertical Z ou en étant légèrement inclinés par rapport à cet axe Z, de sorte que le boîtier 4 du dispositif 2 de chauffage, ventilation et/ou climatisation est plus compact suivant son axe longitudinal X.

Quel que soit le mode de réalisation du deuxième volet 28, selon son positionnement, le flux d'air froid issu du deuxième échangeur thermique 8 est orienté, dans des proportions variables, vers le premier échangeur thermique 6 et/ou directement vers la deuxième chambre de mixage 22 puis vers le conduit 24.

De façon similaire à la partie haute du boîtier 4, l'accès du flux d'air froid au premier échangeur thermique 6 est par exemple réalisé par l'intermédiaire d'un deuxième couloir 29 correspondant à une autre portion du canal 3 d'écoulement d'un flux d'air situé entre l'élément de séparation 30, qui sera décrit ultérieurement, et le premier échangeur thermique 6.

Comme vu précédemment, le dispositif 2 de chauffage, ventilation et/ou climatisation selon l'invention, comprend deux chambres de mixage 15, 22, chacune étant apte à recevoir un flux d'air ayant traversé le premier échangeur thermique 6.

### Séparation des parties supérieure et inférieure du boîtier 4 du dispositif 2 de chauffage, ventilation et/ou climatisation

### • Séparation du flux d'air à destination des chambres de mixage 15, 22

Pour garantir que chaque chambre de mixage 15, 22 reçoit la quantité appropriée de flux d'air chaud, le dispositif 2 de chauffage, ventilation et/ou climatisation comprend un élément de séparation 30 permettant de séparer le flux d'air issu du deuxième échangeur thermique 8 en deux flux d'air distincts, chacun étant destiné à être orienté vers une chambre de mixage spécifique 15, 22. Chaque flux d'air a la possibilité de traverser une partie du premier échangeur thermique 6 par l'intermédiaire des couloirs 19, 29 et/ou un chemin de contournement 16, 26 pour aboutir à la chambre de mixage 15, 22 respective, dans les proportions adéquates pour garantir les températures de consigne respectives.

L'élément de séparation 30 est par exemple agencé à proximité du premier échangeur thermique 6. Selon le mode de réalisation décrit dans lequel les premier et deuxième volets 18, 28 sont agencés en amont du premier échangeur thermique 6, l'élément de séparation 30 est de façon complémentaire également agencé en amont du premier échangeur thermique 6. Dans cet exemple, l'élément de séparation 30 est situé à proximité du premier échangeur thermique 6 entre ses extrémités, autrement dit entre des lignes de prolongement virtuelles des extrémités du premier échangeur thermique 6. Selon l'exemple illustré, l'élément de séparation 30 est agencé par rapport aux extrémités longitudinales du premier échangeur thermique 6. L'élément de séparation 30 peut par exemple être situé sensiblement au milieu de la hauteur du premier échangeur thermique 6 de manière à ce que la section du premier couloir 19 soit égale à celle du deuxième couloir 29. L'élément de séparation 30 peut également être localisé de manière à ce que la section du premier couloir 19 soit supérieure à celle du deuxième couloir 29 ou inversement.

L'élément de séparation 30 tel qu'illustré sur les figures 2a, 2b, 4 et 5a, correspond à un ensemble de parois reliées entre elles formant ainsi un polygone creux. Toutefois, une unique paroi peut suffire pour remplir cette fonction.

L'élément de séparation 30 comprend avantageusement des moyens de réceptions, tels que des portions d'appui, aptes à accueillir les premier et deuxième volets 18, 28.

A titre d'exemple non limitatif, ces moyens de réceptions peuvent comprendre au moins une portion d'appui, contre laquelle le premier volet 18 ou le deuxième volet 28 vient s'appuyer, choisie parmi : une paroi incurvée, une paroi plane, ou encore une butée surmoulée sur une paroi plane.

En outre, selon le mode de réalisation illustré comprenant un radiateur électrique 7 additionnel agencé à proximité du premier échangeur thermique 6, dans cet exemple en aval selon le sens d'écoulement du flux d'air, on peut prévoir une paroi de séparation 30' agencée entre le premier échangeur thermique 6 et le radiateur électrique 7 additionnel formant un prolongement de l'élément de séparation 30. La paroi de séparation 30' est donc agencée sensiblement au même niveau de la hauteur du premier échangeur thermique 6 que l'élément de séparation 30.

### • Séparation des chambres de mixage 15, 22

Comme dit précédemment, un tel dispositif 2 est adapté pour un traitement thermique multizone, c'est-à-dire que différentes zones du véhicule peuvent être aérées à des températures différentes.

Un passager peut commander une température de consigne pour le flux d'air issu de la première chambre de mixage 15, et un autre passager peut commander une température de consigne différente pour le flux d'air issu de la deuxième chambre de mixage 22. Typiquement, il est avantageux pour un dispositif de chauffage, ventilation et/ou climatisation fonctionnant selon un mode en trois-quatre zones ou à double nappes (couramment appelé double-layer en anglais), d'avoir les deux chambres de mixage 15, 22 indépendantes. Tandis que pour un mode une-deux zones, il est plus avantageux d'avoir les chambres de mixage 15, 22 dépendantes.

Afin de garantir la dépendance ou l'indépendance des deux chambres de mixage 15, 22 un volet de séparation 32 est agencé entre les deux chambres de mixage 15, 22 pouvant ainsi soit les réunir, soit isoler l'une de l'autre.

Bien entendu, le volet de séparation 32 réunit les deux chambres de mixage 15, 22 en adoptant une position extrême dite « ouverte », tel qu'illustré sur les figures 2a et 2b et isole les deux chambres de mixage 15, 22 en adoptant une position extrême dite « fermée », tel qu'illustré sur les figures 4 et 5a, et définit ainsi la partie supérieure du boîtier 4 comprenant la première chambre de mixage 15 et la partie inférieure du boîtier 4 comprenant la deuxième chambre de mixage 22, de part et d'autre du volet de séparation 32.

Le volet de séparation 32 est ici aligné avec l'élément de séparation 30, et éventuellement la paroi de séparation 30'. Cet alignement permet de compartimenter le boîtier 4 en deux.

En outre, la première ouverture 17 au niveau de la face d'extrémité longitudinale 4b du boîtier 4 débouchant dans la première chambre de mixage 15 et la deuxième ouverture 27 du boîtier 4 débouchant dans la deuxième chambre de mixage 22 sont agencées de part et d'autre de ce volet de séparation 32 selon l'axe vertical Z. Plus précisément, la première ouverture 17 est située au-dessus du volet de séparation 32 et la deuxième ouverture 27 est située en-dessous du volet de séparation 32.

### Adaptation selon le mode de fonctionnement du dispositif 2 de chauffage, ventilation et/ou climatisation

Selon le mode de fonctionnement choisi pour le dispositif 2 de chauffage, ventilation et/ou climatisation, c'est le premier module additionnel 200 adapté pour un mode une-deux zones ou double nappes, ou le deuxième module additionnel 300 adapté pour un mode trois-quatre zones qui est monté sur le boîtier 4, ici au niveau de sa face d'extrémité longitudinale 4b. Plus précisément, le module additionnel 200 ou 300 est destiné à être assemblé au niveau de la cavité d'assemblage du boîtier 4 de manière à délimiter un canal de circulation du flux d'air à destination de la région des pieds à l'avant du véhicule.

A cet effet, la cavité d'assemblage (non visible sur les figures) est agencée sur le boîtier 4 de sorte que le conduit 14 de sortie pieds avant débouche dans cette cavité d'assemblage. Il en découle que la cavité d'assemblage est délimitée par des parois du boîtier 4, et notamment par des parois du boîtier 4 délimitant le conduit 14 de sortie pieds avant.

En outre, selon l'exemple particulier décrit, la deuxième ouverture 27 du boîtier 4 débouche également sur la cavité d'assemblage, de manière à mettre en communication la deuxième chambre de mixage 22 et la cavité d'assemblage. Il va de soi que ceci est possible lorsque la deuxième ouverture 27 n'est pas obturée.

Bien entendu, le module additionnel 200 ou 300 présente une forme complémentaire de la forme de la cavité d'assemblage. En particulier, le pourtour du module additionnel 200 ou 300 peut être conformé pour venir épouser la forme des parois du boîtier 4 délimitant la cavité d'assemblage.

La fixation du module additionnel 200 ou 300 sur le boîtier 4 peut se faire par tout moyen approprié.

### Module additionnel 200 pour un fonctionnement une-deux zones ou double nappes

En référence aux figures 2a à 4, un premier module additionnel 200 pour un mode une-deux zones ou double nappes est agencé sur le boîtier 4.

Le premier module additionnel 200 est agencé de manière à délimiter un canal de circulation du flux d'air entre la deuxième ouverture 27 du boîtier 4 débouchant dans la deuxième chambre de mixage 22 et le conduit 14 de sortie pieds avant. De la sorte, le conduit 14 de sortie pieds avant est mis en communication avec la deuxième chambre de mixage 22 via la deuxième ouverture 27, de façon à pouvoir être alimenté par cette deuxième chambre de mixage 22.

Dans ce cas, la première ouverture 17 débouchant dans la première chambre de mixage 15 est quant à elle obturée. Selon l'exemple illustré sur les figures 2a, 2b, 3a et 4, cette première ouverture 17 est obturée par la cloison Ç du boîtier 4, plus précisément par la cloison Ç de la face d'extrémité longitudinale 4b du boîtier 4.

En outre, le premier module additionnel 200 mieux visible sur les figures 3a à 3c comporte une paroi de fermeture 202 obturant l'entrée de la cavité d'assemblage prévue sur le boîtier 4. On entend par entrée de la cavité, la zone de la cavité accessible depuis l'extérieur du boîtier 4 permettant de réaliser l'assemblage du premier module additionnel 200 ou du deuxième module additionnel 300 sur le boîtier 4. L'entrée de la cavité est selon le mode de réalisation illustré agencé dans un plan situé en-dessous du volet de séparation 32 selon l'axe vertical Z. La paroi de fermeture 202 ferme ainsi l'accès à la cavité d'assemblage depuis l'extérieur du boîtier 4. Pour ce faire, la paroi de fermeture 202 est de forme complémentaire de la forme de l'entrée de la cavité d'assemblage prévue sur le boîtier 4.

La paroi de fermeture 202 peut présenter au moins une portion 204 sensiblement plane. Dans l'exemple illustré, la paroi de fermeture 202 présente une portion 204 centrale sensiblement plane.

La paroi de fermeture 202 présente par exemple en outre une ou plusieurs portions surélevées 206, 208 par rapport à la portion plane 204. On entend par « surélevé », le fait que la ou les portions 206, 208 dites surélevées dépassent verticalement la portion plane 204 selon l'axe Z à l'état monté du dispositif 2 de chauffage, ventilation et/ou climatisation dans le véhicule. Les portions surélevées 206, 208 sont conformées pour venir épouser la forme des bords des parois du boîtier 4 délimitant la cavité d'assemblage apte à recevoir le premier module additionnel 200.

Plus précisément, selon l'exemple illustré, la paroi de fermeture 202 présente deux portions latérales surélevées 206 par rapport à la portion plane 204. Les deux portions latérales 206 sont agencées à l'opposé l'une de l'autre, de part et d'autre de la portion plane 204 selon l'axe Y schématisé sur les figures 1 et 3b.

Chaque portion latérale surélevée 206 est conformée pour coopérer avec la forme des parois du boîtier 4 délimitant la cavité d'assemblage. Selon le mode de réalisation décrit dans lequel le conduit 14 de sortie pieds avant débouche sur la cavité d'assemblage, les portions latérales surélevées 206 sont conformées de manière à coopérer avec des parois du boîtier 4 délimitant le conduit 14 de sortie pieds avant. Plus précisément dans cet exemple, les deux portions latérales surélevées 206 sont aptes à coopérer avec des parois du boîtier 4 délimitant le conduit 14 de sortie pieds avant, de part et d'autre de la cloison de séparation interne 5 du boîtier 4.

De plus, la paroi de fermeture 202 présente dans cet exemple une portion avant surélevée 208 liée à la portion plane 204 et aux deux portions surélevées latérales 206, et conformée de manière à venir coopérer avec des parois du boîtier 4 délimitant la cavité d'assemblage en-dessous du volet de séparation 32.

La paroi de fermeture 202 présente encore dans cet exemple une portion rabaissée 210 par rapport à la portion plane 204, c'est-à-dire située en dessous du plan défini par la portion plane 204 selon l'axe Z à l'état monté dans le véhicule, ici une portion arrière rabaissée 210, qui est conformée de manière à coopérer avec des parois du boîtier 4 délimitant la cavité d'assemblage. Cette portion rabaissée 210 est liée à la portion plane 204 centrale et aux deux portions surélevées latérales 206 et est agencée à l'opposé de la portion avant surélevée 208 selon l'axe X.

Le premier module additionnel 200 peut comprendre également une paroi arrière 212 s'étendant parallèlement au plan YZ. La paroi arrière 212 est ici destinée à être insérée à l'intérieur de la cavité d'assemblage du boîtier 4. Cette paroi arrière 212 est apte à venir en appui contre une paroi interne du boîtier 4, à l'état assemblé du premier module additionnel 200 dans la cavité d'assemblage du boîtier 4.

Enfin, le premier module additionnel 200 peut comprendre avantageusement au moins deux parois latérales 214, ici trois parois latérales 214. Dans cet exemple, les parois latérales 214 sont reliées par la paroi arrière 212.

Les parois latérales 214 s'étendent parallèlement au plan XZ et permettent de délimiter des sous-conduits du conduit 14 de sortie pieds avant d'une part pour alimenter la partie gauche du véhicule et d'autre part pour alimenter la partie droite du véhicule. Les parois latérales 214 permettent également de délimiter des sous-conduits du conduit 24 destiné à alimenter la zone arrière de l'habitacle, notamment vers les pieds arrière et aussi vers une ou plusieurs ventilations arrière.

Les parois latérales 214 peuvent en outre assurer une fonction de support pour au moins un axe de volet.

Dans l'exemple illustré, les parois latérales 214 forment un support d'axe pour le volet 13 (cf. figure 2a) agencé dans le conduit 14 de sortie pieds avant pour contrôler ou bloquer l'accès du flux d'air. A cet effet, des moyens de support, tels que des encoches 216, sont prévus sur les parois latérales 214 (cf. figures 3b et 3c). Les encoches 216 sont de forme complémentaire de l'axe du volet 13, ici de forme sensiblement demi-circulaire. En outre, les encoches 216 sont dans cet exemple agencées sur les parois latérales 214 selon l'axe Z, par exemple sur la bordure périphérique de chaque paroi latérale 214.

Dans l'exemple illustré, les parois latérales 214 forment également un support d'axe pour le volet 23 (cf. figure 2a) agencé dans le conduit 24 pour alimenter la zone arrière de l'habitacle de manière à contrôler ou bloquer l'accès du flux d'air. A cet effet, des moyens de support, tels que des encoches 218, sont prévus sur les parois latérales 214. Les encoches 218 sont de forme complémentaire de l'axe du volet 23, ici de forme sensiblement demi-circulaire. De plus, les encoches 218 sont dans cet exemple, agencées sur les parois latérales 214 selon l'axe X, par exemple sur la bordure périphérique de chaque paroi latérale 214.

Bien entendu, la forme du premier module additionnel 200 est décrite ci-dessus à titre d'exemple. La forme du premier module additionnel 200 peut être adaptée en fonction de la forme de la cavité d'assemblage du boîtier 4 recevant le premier module additionnel 200.

### Module additionnel 300 pour un fonctionnement trois-quatre zones

En référence aux figures 5a à 5d, un deuxième module additionnel 300 pour un mode trois-quatre zones est agencé sur le boîtier 4 au lieu du premier module additionnel 200 tel que décrit en référence aux figures 2a à 4.

Le deuxième module additionnel 300 est agencé de manière à délimiter un canal de circulation du flux d'air entre la première ouverture 17 du boîtier 4 débouchant dans la première chambre de mixage 15 et le conduit 14 de sortie pieds avant. De la sorte, le conduit 14 de sortie pieds avant est mis en communication avec la première chambre de mixage 15 via la première ouverture 17, de façon à pouvoir être alimenté par cette première chambre de mixage 15.

Pour ce faire, le deuxième module additionnel 300 comporte une paroi externe 302 délimitant le canal de circulation du flux d'air qui met en communication la première ouverture 17 du boîtier 4 avec le conduit 14 de sortie pieds avant. On entend par paroi « externe », le fait qu'à l'état assemblé du deuxième module additionnel 300 sur le boîtier 4, cette paroi externe 302 est accessible depuis l'extérieur du boîtier 4.

La première chambre de mixage 15 est ici en communication aéraulique avec le conduit 14 de sortie pieds avant, via la cavité d'assemblage. Autrement dit, le deuxième module additionnel 300 est agencé au niveau de la cavité d'assemblage sans fermer l'entrée de la cavité d'assemblage. Ainsi, le flux d'air en provenance de la première chambre de mixage 15 peut circuler vers le conduit 14 de sortie pieds avant en passant par l'entrée de la cavité d'assemblage.

Le canal de circulation du flux d'air délimité par la paroi externe 302 du deuxième module additionnel 300 forme un canal de déviation du flux d'air par rapport au canal de circulation du flux d'air selon un mode de fonctionnement une-deux zones ou double nappes du dispositif 2 de chauffage, ventilation et/ou climatisation, défini grâce au premier module additionnel 200 précédemment décrit en référence aux figures 3a à 3c.

Par ailleurs, selon le mode de réalisation illustré, la paroi externe 302 du deuxième module additionnel 300 comprend :
- une première partie 304 s'étendant selon une courbure, et
- une deuxième partie 306 s'étendant de façon sensiblement parallèle à la face du boîtier 4, ici la face d'extrémité 4b, portant le deuxième module additionnel 300.

La première partie 304 est sensiblement bombée ou convexe avec une convexité orientée vers l'extérieur du deuxième module additionnel 300.

Selon le mode illustré sur les figures 5a et 5b, la première partie 304 de la paroi externe 302 est agencée au-dessus et à distance de l'entrée de la cavité d'assemblage selon l'axe Z.

La première partie 304 est conformée pour venir épouser la forme des bords des parois du boîtier 4 délimitant la première ouverture 17 du boîtier 4. Il s'agit en particulier de la face de la première partie 304 de la paroi externe 302 destinée à être en regard de la face 4b du boîtier 4, ici la face d'extrémité longitudinale 4b, qui est conformée pour coopérer avec les parois délimitant la première ouverture 17 lors de l'assemblage.

Dans ce cas, en référence aux figures 5a et 5d, le deuxième module additionnel 300 comprend avantageusement un orifice 307 destiné à être agencé en regard de la première ouverture 17 prévue sur le boîtier 4. Il s'agit en particulier de la face de la première partie 304 de la paroi externe 302 en regard du boîtier 4 qui présente cet orifice 307. L'orifice 307 est donc destiné à être agencé au-dessus du volet de séparation 32 lors de l'assemblage. Cet orifice 307 définit une entrée du canal de circulation du flux d'air à travers le deuxième module additionnel 300 et permet, à l'état assemblé du deuxième module additionnel 300 sur le boîtier 4, de laisser passer le flux d'air en provenance de la première chambre de mixage 15 à travers le deuxième module additionnel 300.

De plus, on peut prévoir un point d'inflexion à l'intersection 308 des deux parties 304 et 306 du deuxième module additionnel 300.

En outre, le deuxième module additionnel 300 étant destiné à venir s'assembler sur le boîtier 4, avec au moins une partie, ici la première partie 304 sensiblement courbée, au-dessus du volet de séparation 32, la face du deuxième module additionnel 300 en regard du volet de séparation 32, présente un décrochement de forme sensiblement arrondie 309 selon l'axe Y schématisé sur les figures 1 et 5c pour coopérer avec l'axe du volet de séparation 32.

Le deuxième module additionnel 300 peut en outre présenter une partie arrière 310 à la périphérie de la deuxième partie 306, qui est conformée de manière à coopérer avec des parois du boîtier 4 délimitant la cavité d'assemblage.

Par ailleurs, le deuxième module additionnel 300 comprend avantageusement, dans cet exemple au niveau de la première partie 304, un passage 311 pour un volet supplémentaire 34 destiné à être agencé mobile dans le canal de déviation du flux d'air formé entre la première ouverture 17 et le conduit 14 de sortie pieds avant grâce à ce deuxième module additionnel 300. Ce volet supplémentaire 34 a pour fonction de contrôler ou bloquer l'accès du flux d'air.

Le deuxième module additionnel 300 comprend également avantageusement une paroi arrière 312 s'étendant parallèlement au plan YZ. La paroi arrière 312 est ici destinée à être insérée à l'intérieur de la cavité d'assemblage du boîtier 4. Cette paroi arrière 312 est apte à venir en appui contre une paroi interne du boîtier 4, à l'état assemblé du deuxième module additionnel 300 dans la cavité d'assemblage du boîtier 4.

De plus, selon le mode de réalisation illustré sur les figures 5c et 5d, le deuxième module additionnel 300 peut présenter une ou plusieurs parois latérales 314, par exemple deux parois latérales 314. Dans cet exemple, les parois latérales 314 sont reliées par la paroi arrière 312. Les parois latérales 314 s'étendent parallèlement au plan XZ et permettent de délimiter des sous-conduits du conduit 14 de sortie pieds avant d'une part pour alimenter la partie gauche du véhicule et d'autre part pour alimenter la partie droite du véhicule. Les parois latérales 314 permettent également de délimiter des sous-conduits du conduit 24 destiné à alimenter la zone arrière de l'habitacle, notamment vers les pieds arrière et aussi vers une ou plusieurs ventilations arrière.

De façon similaire au premier module additionnel 200, les parois latérales 314 du deuxième module additionnel 300 peuvent en outre assurer une fonction de support pour au moins un axe de volet.

Dans l'exemple illustré, les parois latérales 314 forment un support d'axe pour le volet 13 (cf. figures 5a-5b) agencé dans le conduit 14 de sortie pieds avant pour contrôler ou bloquer l'accès du flux d'air. A cet effet, des moyens de support, tels que des encoches 316, sont prévus sur les parois latérales 314 (cf. figures 5c-5d). Les encoches 316 sont de forme complémentaire de l'axe du volet 13, ici de forme sensiblement demi-circulaire. En outre, les encoches 316 sont dans cet exemple agencées sur les parois latérales 314 selon l'axe Z, par exemple sur la bordure périphérique de chaque paroi latérale 314.

Dans l'exemple illustré, les parois latérales 314 forment également un support d'axe pour le volet 23 (cf. figures 5a-5b) agencé dans le conduit 24 pour alimenter la zone arrière de l'habitacle pour contrôler ou bloquer l'accès du flux d'air. A cet effet, des moyens de support, tels que des encoches 318, sont prévus sur les parois latérales 314. Les encoches 318 sont de forme complémentaire de l'axe du volet 23, ici de forme sensiblement demi-circulaire. De plus, les encoches 318 sont dans cet exemple, agencées sur les parois latérales 314 selon l'axe X, par exemple sur la bordure périphérique de chaque paroi latérale 314.

En outre, lorsque le deuxième module additionnel 300 est agencé sur le boîtier 4 pour mettre en communication le conduit 14 de sortie pieds avant avec la première chambre de mixage 15, la deuxième ouverture 27 débouchant dans la deuxième chambre de mixage 22 est quant à elle obturée.

Selon le mode de réalisation illustré, le deuxième module additionnel 300 comporte à cet effet une paroi interne 320 qui forme une cloison pour obturer la deuxième ouverture 27 du boîtier 4. On entend par paroi interne, le fait qu'à l'état assemblé du deuxième module additionnel 300 sur le boîtier 4, cette paroi interne 320 est située à l'intérieur du dispositif 2 de chauffage, ventilation et/ou climatisation.

Il s'agit ici d'une paroi interne 320 avant présentant au moins une portion s'étendant selon l'axe Z. Selon l'exemple illustré, la paroi interne 320 présente de plus une portion s'étendant selon l'axe X.

En outre, de façon complémentaire aux encoches 316, cette paroi interne 320 peut présenter des portions sensiblement arrondies 322 complémentaires de la forme de l'axe du volet 13 et permettant le passage de l'axe du volet 13.

Bien entendu, la forme du deuxième module additionnel 300 est décrite ci-dessus à titre d'exemple. La forme du deuxième module additionnel 300 peut être adaptée en fonction de la forme de la cavité d'assemblage du boîtier 4 recevant le deuxième module additionnel 300. Par ailleurs, l'encombrement du boîtier 4 recevant le deuxième module additionnel 300 est sensiblement le même que l'encombrement du boîtier 4 recevant le premier module additionnel 200.

### Assemblage du dispositif 2 de chauffage, ventilation et/ou climatisation

Le procédé d'assemblage d'un dispositif 2 de chauffage, ventilation et/ou climatisation tel que décrit précédemment comprend une étape d'assemblage du boîtier 4 de sorte qu'il définisse :
- au moins le conduit 14 de sortie pieds avant dudit véhicule, ici le boîtier 4 définit de plus les conduits 10 pour le dégivrage du pare-brise, 12 pour la ventilation latérale/centrale à l'avant de l'habitacle, et 24 pour l'aération arrière et les pieds à l'arrière de l'habitacle,
- la première chambre de mixage 15 du flux d'air,
- la deuxième chambre de mixage 22 du flux d'air,
- la première ouverture 17 débouchant dans la première chambre de mixage 15,
- la deuxième ouverture 27 débouchant dans la deuxième chambre de mixage 22, et
- la cavité d'assemblage apte à recevoir l'un ou l'autre module additionnel 200 ou 300.

On peut prévoir encore une étape d'assemblage de la cloison de séparation interne 5 divisant le boîtier 4.

Bien entendu, cette étape d'assemblage peut comprendre une sous-étape d'agencement des composants au sein du boîtier tels que les moyens de traitement thermique, dans cet exemple le premier échangeur thermique 6, le radiateur additionnel 7, le deuxième échangeur thermique 8, ainsi que les volets 18, 28, et les éventuels volets 9, 11, 13 et 23 respectivement dans les conduits 10, 12, 14 et 24.

Le procédé d'assemblage comprend également une étape d'agencement du volet de séparation 32 de façon mobile dans le boîtier 4 et entre la première chambre de mixage 15 et la deuxième chambre de mixage 22, de manière à pouvoir isoler ou réunir la première chambre de mixage 15 et la deuxième chambre de mixage 22 selon la position du volet de séparation 32.

Enfin, le procédé comprend en outre une étape d'insertion et d'assemblage d'un premier module additionnel 200 pour un mode une-deux zones dans la cavité d'assemblage du boîtier 4 en communication aéraulique avec ledit conduit 14 et la deuxième ouverture 27, de manière à délimiter un canal de circulation du flux d'air entre la deuxième ouverture 27 et ledit conduit 14. Dans ce cas, le procédé comprend également une étape d'assemblage de la cloison C d'obturation de la première ouverture 17 du boîtier 4.

Le dispositif 2 de chauffage, ventilation et/ou climatisation est alors apte à être utilisé pour un traitement thermique homogène de l'habitacle, ou encore selon un mode double nappes ou « dual layer » en anglais, mais aussi selon un mode permettant une distinction thermique entre la droite et la gauche de l'habitacle grâce à la cloison de séparation interne 5.

Alternativement, le procédé comprend en outre une étape d'insertion et d'assemblage d'un module additionnel 300 pour un mode trois-quatre zones dans la cavité d'assemblage du boîtier 4 en communication aéraulique avec ledit conduit 14 et la première ouverture 17, de manière à délimiter un canal de circulation du flux d'air entre la première ouverture 17 et ledit conduit 14. Dans ce cas, une paroi interne 320 du deuxième module additionnel obture l'autre ouverture 27 du boîtier et il n'est pas nécessaire de prévoir de cloison supplémentaire.

Le dispositif 2 de chauffage, ventilation et/ou climatisation est alors apte à être utilisé pour un traitement thermique une distinction thermique entre l'avant et l'arrière, et éventuellement pour la zone avant et/ou arrière une distinction thermique entre la droite et la gauche de l'habitacle grâce à la cloison de séparation interne 5.

Bien entendu, l'ordre des étapes décrites précédemment peut être interverti sans sortir du cadre de l'invention.

### Fonctionnement du dispositif 2 de chauffage, ventilation et/ou climatisation

### Mode une-deux zones

Pour un fonctionnement mono-zone ou bi-zones, le volet de séparation 32 des deux chambres de mixage 15, 22 est agencée dans la position dite « ouverte » réunissant les deux chambres de mixage 15, 22, tel qu'illustré sur les figures 2a et 2b. La première chambre de mixage 15 et la deuxième chambre de mixage 22 sont dans ce cas dépendantes l'une de l'autre, ou autrement dit en communication aéraulique l'une avec l'autre.

Le premier module additionnel 200 est agencé sur le boîtier 4 au niveau de la cavité d'assemblage du boîtier 4 de façon à délimiter un canal de circulation du flux d'air entre la deuxième chambre de mixage 22 et le conduit 14 de sortie pieds avant via la deuxième ouverture 27 du boîtier 4.

De plus, le boîtier 4 présente sur sa face d'extrémité 4b une cloison Ç obturant la première ouverture 17.

De la sorte, le conduit 14 de sortie pieds avant est alimenté en air par la deuxième chambre de mixage 22 via la deuxième ouverture 27 du boîtier 4 mais aussi par la première chambre de mixage 15.

On peut ainsi réaliser un traitement thermique homogène par lequel les différentes zones du véhicule sont aérées à une même température, il s'agit du mode de fonctionnement mono-zone ou une zone.

En variante, on peut réaliser un traitement thermique avec une distinction de température entre les parties gauche et droite de l'habitacle grâce à l'agencement de la cloison de séparation interne 5 et par la commande indépendante des volets dans chaque partie gauche droite du dispositif 2 de chauffage, ventilation et/ou climatisation. Il s'agit alors d'un fonctionnement en mode bizones ou deux zones permettant un réglage séparé du flux d'air sortant respectivement au niveau des places à gauche et à droite de l'habitacle.

### Mode double nappes ou double laver en anglais

Au contraire, si le dispositif 2 de chauffage, ventilation et/ou climatisation doit fonctionner selon un mode dit double nappes ou « double layer » en anglais, selon lequel l'air de l'habitacle à plus haute température est soufflé à travers les buses de pied et l'air extérieur présentant un taux d'humidité inférieur est soufflé à travers les buses de dégivrage, le volet de séparation 32 est agencé dans la position dite « fermée » isolant les deux chambres de mixage 15, 22, tel qu'illustré sur la figure 4.

Le premier module additionnel 200 qui est donc le même que pour un mode de fonctionnement une-deux zones est agencé sur le boîtier 4 au niveau de la cavité d'assemblage du boîtier 4 de façon à délimiter un canal de circulation du flux d'air entre la deuxième chambre de mixage 22 et le conduit 14 de sortie pieds avant via la deuxième ouverture 27 du boîtier 4.

Selon ce mode double nappes, le boîtier 4 présente également sur sa face d'extrémité 4b une cloison C obturant la première ouverture 17.

Ainsi, le conduit 14 de sortie pieds avant est alimenté en air uniquement par une seule chambre de mixage, ici la deuxième chambre de mixage 22.

### Mode trois-quatre zones

Selon une autre variante, si le dispositif 2 de chauffage, ventilation et/ou climatisation doit fonctionner selon un mode trois-quatre zones, permettant de réaliser un traitement thermique avec une distinction de température entre les zones avant et arrière et/ou gauche et droite,
- le volet de séparation 32 est agencé dans la position dite « fermée » isolant la première chambre de mixage 15 et la deuxième chambre de mixage 22, et
- le deuxième module additionnel 300 est agencé sur le boîtier 4 au niveau de la cavité d'assemblage du boîtier 4 de façon à délimiter un canal de circulation du flux d'air entre la première chambre de mixage 15 et le conduit 14 de sortie pieds avant via la première ouverture 17 du boîtier 4.

De la sorte, le flux d'air est apte à circuler depuis la première chambre de mixage 15, dans la partie supérieure du boîtier 4 par rapport au volet de séparation 32 et dans le canal de circulation du flux d'air formé par le deuxième module additionnel 300. Le flux d'air est dévié par rapport au canal de circulation du flux d'air défini selon les modes précédents une-deux zones ou double nappes.

De plus, la deuxième ouverture 27 du boîtier 4 est avantageusement obturée par le deuxième module additionnel 300.

Ainsi, le conduit 14 de sortie pieds avant est alimenté en air par une seule chambre de mixage, ici la première chambre de mixage 15.

On comprend donc que lorsque le dispositif 2 de chauffage, ventilation et/ou climatisation doit fonctionner pour un traitement thermique une-deux zones ou double nappes, il suffit d'agencer le premier module additionnel 200 sur le boîtier 4 et de prévoir une cloison C sur la face 4b du boîtier 4 pour obturer la première ouverture 17. Le conduit 14 de sortie pieds avant se trouve ainsi en communication aéraulique avec la deuxième chambre de mixage 22. Selon la position du volet de séparation 32, le conduit 14 de sortie pieds avant peut être alimenté uniquement par cette deuxième chambre de mixage 22 ou également par la première chambre de mixage 15.

Au contraire, pour un traitement thermique trois-quatre zones, il suffit cette fois d'agencer le deuxième module additionnel 300 sur le boîtier 4. Le conduit 14 de sortie pieds avant se trouve ainsi alimenté par la première chambre de mixage 15.

L'adaptation selon les besoins des constructeurs se fait par l'agencement de l'un ou l'autre des modules additionnels 200 ou 300 sur une face 4b su boîtier 4, et par l'adaptation éventuelle de cette face 4b en prévoyant par exemple une cloison C pour obturer la première ouverture 17. Cette adaptation peut se faire à moindre coût.

Le corps principal du boîtier 4 formé par les faces 4a, 4c, 4d peut être standardisé et reste inchangé selon l'un ou l'autre des modes de fonctionnement. Les composants internes du dispositif 2 de chauffage, ventilation et/ou climatisation, notamment le ou les échangeurs thermiques 6, 7, 8, les volets 18, 28, et le volet de séparation 32, ainsi que leur disposition au sein du boîtier 4, peuvent rester identiques. Il n'est pas non plus nécessaire de prévoir d'éléments additionnels, tels que des volets additionnels, dans le canal 3 d'écoulement du flux d'air défini par le boîtier 4.

Enfin, l'encombrement du dispositif 2 de chauffage, ventilation et/ou climatisation avec le premier module additionnel 200 ou le deuxième module additionnel 300 est relativement compact.

## Revendications

1. Dispositif (2) de chauffage, ventilation et/ou climatisation pour véhicule automobile, l'habitacle dudit véhicule comportant une zone avant et une zone arrière selon le sens de marche dudit véhicule, ledit dispositif (2) comprenant un boîtier (4) comportant :
- un conduit (14) de distribution d'un flux d'air au niveau des pieds dans la zone avant dudit véhicule,
- une première chambre de mixage (15) du flux d'air,
- une deuxième chambre de mixage (22) du flux d'air,
- un volet de séparation (32) agencé mobile de manière à isoler ou réunir la première chambre de mixage (15) et la deuxième chambre de mixage (22),
- le boîtier (4) présentant :
• une première ouverture (17) débouchant dans la première chambre de mixage (15),
• une deuxième ouverture (27) débouchant dans la deuxième chambre de mixage (22), les première (17) et deuxième (27) ouvertures étant agencées de part et d'autre du volet de séparation (32), et
• une cavité d'assemblage à proximité dudit conduit (14),
- et **caractérisé en ce que** ledit dispositif (2) comprend en outre :
• une cloison (C ; 320) apte à obturer la première ouverture (17) ou la deuxième ouverture (27) selon le mode de fonctionnement dudit dispositif (2), et
• un module additionnel (200 ; 300) agencé dans la cavité d'assemblage du boîtier (4) en communication aéraulique avec ledit conduit (14) et avec
la première ouverture (17) lorsque la deuxième ouverture (27) est obturée, ou
la deuxième ouverture (27) lorsque la première ouverture (17) est obturée,
de manière à délimiter sélectivement un canal de circulation du flux d'air entre la première ouverture (17) et ledit conduit (14), ou entre la deuxième ouverture (27) et ledit conduit (14).

2. Dispositif (2) selon la revendication précédente, dans lequel :
- le boîtier (4) comporte deux faces d'extrémité (4a, 4b) selon un axe longitudinal (X) confondu avec l'axe longitudinal dudit véhicule à l'état monté dudit dispositif (2) dans ledit véhicule, et dans lequel
- le module additionnel (200 ; 300) est agencé au niveau d'une face d'extrémité longitudinale (4b) du boîtier (4).

3. Dispositif (2) selon l'une quelconque des revendications 1 à 2, dans lequel :
- le module additionnel (200) est monté sur une face (4b) du boitier (4) et dans lequel
- la cloison (C) obturant, la première ouverture (17) ou la deuxième ouverture (27) selon le mode de fonctionnement dudit dispositif (2), est une cloison (C) de la face (4b) du boîtier (4) destinée à recevoir le module additionnel (200).

4. Dispositif (2) selon l'une quelconque des revendications 1 à 2, dans lequel la cloison (320) obturant la première ouverture (17) ou la deuxième ouverture (27) selon le mode de fonctionnement dudit dispositif (2), est prévue sur le module additionnel (300).

5. Dispositif selon la revendication 3, dans lequel le boîtier (4) présente une cloison (C) obturant la première ouverture (17) et dans lequel un module additionnel (200) pour un mode une-deux zones ou double nappes est assemblé au boîtier (4) de manière à délimiter un canal de circulation du flux d'air entre la deuxième ouverture (27) et ledit conduit (14).

6. Dispositif (2) selon la revendication précédente, dans lequel le module additionnel (200) pour un mode une-deux zones ou double nappes comporte une paroi de fermeture (202) obturant l'entrée de la cavité d'assemblage.

7. Dispositif (2) selon la revendication précédente, dans lequel la paroi de fermeture (202) présente une forme complémentaire de la forme de l'entrée de la cavité d'assemblage et présente au moins une portion (204) sensiblement plane.

8. Dispositif (2) selon la revendication 4, dans lequel un module additionnel (300) pour un mode trois-quatre zones est assemblé au boîtier (4) et comporte d'une part une paroi externe (302) délimitant le canal de circulation du flux d'air qui met en communication la première ouverture (17) du boîtier (4) avec ledit conduit (14), et d'autre part une paroi interne (320) formant cloison d'obturation de la deuxième ouverture (27) du boîtier (4).

9. Dispositif (2) selon la revendication précédente, dans lequel le module additionnel (300) pour un mode trois-quatre zones comprend une ouverture (307) destinée à être agencée en communication aéraulique avec la première ouverture (17) du boîtier (4).

10. Dispositif (2) selon l'une des revendications 8 ou 9, dans lequel le module additionnel (300) pour un mode trois-quatre zones est monté sur une face du boitier (4) et dans lequel la paroi externe (302) du module additionnel (300) pour un mode trois-quatre zones comprend :
- une première partie (304) s'étendant selon une courbure, et
- une deuxième partie (306) s'étendant de façon sensiblement parallèle à la face du boîtier (4) portant ledit module additionnel (300).

11. Dispositif (2) selon la revendication précédente, dans lequel la première partie (304) de la paroi externe (302) du module additionnel (300) pour un mode trois-quatre zones est sensiblement bombée ou convexe avec une convexité orientée vers l'extérieur du module additionnel (300) pour un mode trois-quatre zones.

12. Dispositif (2) selon l'une quelconque des revendications 8 à 11, dans lequel le module additionnel (300) pour un mode trois-quatre zones comprend un volet agencé mobile dans le canal de circulation du flux d'air.

13. Module additionnel (200) pour un dispositif (2) de chauffage, ventilation et/ou climatisation selon l'une quelconque des revendications 5 à 7, apte à délimiter un canal de circulation du flux d'air entre la deuxième ouverture (27) du boîtier (4) dudit dispositif (2) en-dessous du volet de séparation (32) selon un axe vertical (Z) à l'état monté dudit dispositif (2) dans ledit véhicule, et ledit conduit (14),
**caractérisé en ce que** ledit module additionnel (200) comporte une paroi de fermeture (202) apte à obturer une entrée d'une cavité d'assemblage prévue sur le boîtier (4) pour recevoir ledit module additionnel (200).

14. Module additionnel (300) pour un dispositif (2) de chauffage, ventilation et/ou climatisation selon l'une quelconque des revendications 8 à 12, apte à délimiter un canal de circulation du flux d'air entre la première ouverture (17) du boîtier (4) dudit dispositif (2) au-dessus du volet de séparation (32) selon un axe vertical (Z) à l'état monté dudit dispositif (2) dans ledit véhicule, et ledit conduit (14),
**caractérisé en ce que** ledit module additionnel (300) comporte :
- une paroi externe (302) apte à délimiter ledit canal de circulation du flux d'air,
- une ouverture (307) destinée à être agencée en communication aéraulique avec la première ouverture (17) du boîtier, et
- une paroi interne (320) formant cloison d'obturation de la deuxième ouverture (27) du boîtier (4).

## Patentansprüche

1. Heizungs-, Lüftungs- und/oder Klimasteuerungsvorrichtung (2) für ein Kraftfahrzeug, wobei der Innenraum des Fahrzeugs eine vordere Zone und eine hintere Zone in Fahrtrichtung des Fahrzeugs aufweist, wobei die Vorrichtung (2) ein Gehäuse (4) enthält, das aufweist:
- eine Leitung (14) zur Verteilung eines Luftstroms im Bereich der Füße in der vorderen Zone des Fahrzeugs,
- eine erste Mischkammer (15) des Luftstroms,
- eine zweite Mischkammer (22) des Luftstroms,
- eine Trennklappe (32), die beweglich angeordnet ist, um die erste Mischkammer (15) und die zweite Mischkammer (22) zu isolieren oder zu vereinen,
- wobei das Gehäuse (4) aufweist:
• eine erste Öffnung (17), die in die erste Mischkammer (15) mündet,
• eine zweite Öffnung (27), die in die zweite Mischkammer (22) mündet, wobei die erste (17) und die zweite (27) Öffnung zu beiden Seiten der Trennklappe (32) angeordnet sind, und
• einen Montagehohlraum in der Nähe der Leitung (14),
und **dadurch gekennzeichnet, dass** die Vorrichtung (2) außerdem enthält:
• eine Trennwand (C; 320), die die erste Öffnung (17) oder die zweite Öffnung (27) je nach der Betriebsart der Vorrichtung (2) verschließen kann, und
• ein zusätzliches Modul (200; 300), das im Montagehohlraum des Gehäuses (4) in Luftzirkulationsverbindung mit der Leitung (14) und mit
der ersten Öffnung (17), wenn die zweite Öffnung (27) verschlossen ist, oder
der zweiten Öffnung (27), wenn die erste Öffnung (17) verschlossen ist,
angeordnet ist, um selektiv einen Zirkulationskanal des Luftstroms zwischen der ersten Öffnung (17) und der Leitung (14) oder zwischen der zweiten Öffnung (27) und der Leitung (14) zu begrenzen.

2. Vorrichtung (2) nach dem vorhergehenden Anspruch, wobei:
- das Gehäuse (4) zwei Endseiten (4a, 4b) gemäß einer Längsachse (X) aufweist, die mit der Längsachse des Fahrzeugs im montierten Zustand der Vorrichtung (2) im Fahrzeug zusammenfällt, wobei
- das zusätzliche Modul (200; 300) im Bereich einer Längs-Endseite (4b) des Gehäuses (4) angeordnet ist.

3. Vorrichtung (2) nach einem der Ansprüche 1 bis 2, wobei:
- das zusätzliche Modul (200) auf eine Seite (4b) des Gehäuses (4) montiert ist, und wobei
- die Trennwand (C), die die erste Öffnung (17) oder die zweite Öffnung (27) je nach der Betriebsart der Vorrichtung (2) verschließt, eine Trennwand (C) der Seite (4b) des Gehäuses (4) ist, die dazu bestimmt ist, das zusätzliche Modul (200) aufzunehmen.

4. Vorrichtung (2) nach einem der Ansprüche 1 bis 2, wobei die die erste Öffnung (17) oder die zweite Öffnung (27) je nach der Betriebsart der Vorrichtung (2) verschließende Trennwand (320) auf dem zusätzlichen Modul (300) vorgesehen ist.

5. Vorrichtung nach Anspruch 3, wobei das Gehäuse (4) eine die erste Öffnung (17) verschließende Trennwand (C) aufweist, und wobei ein zusätzliches Modul (200) für eine 1-2-Zonen- oder Doppellagen-Betriebsart am Gehäuse (4) montiert ist, um einen Zirkulationskanal des Luftstroms zwischen der zweiten Öffnung (27) und der Leitung (14) zu begrenzen.

6. Vorrichtung (2) nach dem vorhergehenden Anspruch, wobei das zusätzliche Modul (200) für eine 1-2-Zonen oder Doppellagen-Betriebsart eine Schließwand (202) aufweist, die den Eingang des Montagehohlraums verschließt.

7. Vorrichtung (2) nach dem vorhergehenden Anspruch, wobei die Schließwand (202) eine zur Form des Eingangs des Montagehohlraums komplementäre Form aufweist und mindestens einen im Wesentlichen ebenen Teil (204) aufweist.

8. Vorrichtung (2) nach Anspruch 4, wobei ein zusätzliches Modul (300) für eine 3-4-Zonen-Betriebsart an das Gehäuse (4) montiert ist und einerseits eine Außenwand (302), die den Zirkulationskanal des Luftstroms begrenzt, der die erste Öffnung (17) des Gehäuses (4) mit der Leitung (14) verbindet, und andererseits eine Innenwand (320) aufweist, die eine Schließtrennwand der zweiten Öffnung (27) des Gehäuses (4) bildet.

9. Vorrichtung (2) nach dem vorhergehenden Anspruch, wobei das zusätzliche Modul (300) für eine 3-4-Zonen-Betriebsart eine Öffnung (307) enthält, die dazu bestimmt ist, in Luftzirkulationsverbindung mit der ersten Öffnung (17) des Gehäuses (4) angeordnet zu sein.

10. Vorrichtung (2) nach einem der Ansprüche 8 oder 9, wobei das zusätzliche Modul (300) für eine 3-4-Zonen-Betriebsart auf eine Seite des Gehäuses (4) montiert ist, und wobei die Außenwand (302) des zusätzlichen Moduls (300) für eine 3-4-Zonen-Betriebsart umfasst:
- einen ersten Teil (304), der sich gemäß einer Krümmung erstreckt, und
- einen zweiten Teil (306), der sich im Wesentlichen parallel zu der Seite des Gehäuses (4) erstreckt, die das zusätzliche Modul (300) trägt.

11. Vorrichtung (2) nach dem vorhergehenden Anspruch, wobei der erste Teil (304) der Außenwand (302) des zusätzlichen Moduls (300) für eine 3-4-Zonen-Betriebsart im Wesentlichen gewölbt oder konvex ist, mit einer zur Außenseite des zusätzlichen Moduls (300) für eine 3-4-Zonen-Betriebsart ausgerichteten konvexen Wölbung.

12. Vorrichtung (2) nach einem der Ansprüche 8 bis 11, wobei das zusätzliche Modul (300) für eine 3-4-Zonen-Betriebsart eine Klappe enthält, die beweglich im Zirkulationskanal des Luftstroms angeordnet ist.

13. Zusätzliches Modul (200) für eine Heizungs-, Lüftungs- und/oder Klimasteuerungsvorrichtung (2) nach einem der Ansprüche 5 bis 7, das einen Zirkulationskanal des Luftstroms zwischen der zweiten Öffnung (27) des Gehäuses (4) der Vorrichtung (2) unterhalb der Trennklappe (32) gemäß einer senkrechten Achse (Z) im montierten Zustand der Vorrichtung (2) im Fahrzeug und der Leitung (14) begrenzen kann,
**dadurch gekennzeichnet, dass** das zusätzliche Modul (200) eine Schließwand (202) aufweist, die einen Eingang eines Montagehohlraums verschließen kann, der auf dem Gehäuse (4) vorgesehen ist, um das zusätzliche Modul (200) aufzunehmen.

14. Zusätzliches Modul (300) für eine Heizungs-, Lüftungs- und/oder Klimasteuerungsvorrichtung (2) nach einem der Ansprüche 8 bis 12, das einen Zirkulationskanal des Luftstroms zwischen der ersten Öffnung (17) des Gehäuses (4) der Vorrichtung (2) oberhalb der Trennklappe (32) gemäß einer senkrechten Achse (Z) im montierten Zustand der Vorrichtung (2) im Fahrzeug und der Leitung (14) begrenzen kann,
**dadurch gekennzeichnet, dass** das zusätzliche Modul (300) aufweist:
- eine Außenwand (302), die den Zirkulationskanal des Luftstroms begrenzen kann,
- eine Öffnung (307), die dazu bestimmt ist, in Luftzirkulationsverbindung mit der ersten Öffnung (17) des Gehäuses angeordnet zu sein, und
- eine Innenwand (320), die eine Schließtrennwand der zweiten Öffnung (27) des Gehäuses (4) bildet.

## Claims

1. Device (2) for heating, ventilation and/or air conditioning of a motor vehicle, the interior of said vehicle comprising a front zone and a rear zone in the direction of travel of said vehicle, said device (2) comprising a housing (4) containing:
- a duct (14) for distributing an air flow to the footwell in the front zone of said vehicle,
- a first air flow mixing chamber (15),
- a second air flow mixing chamber (22),
- a separating flap (32) arranged movably so as to isolate or connect the first mixing chamber (15) and the second mixing chamber (22),
- the housing (4) having
• a first opening (17) leading to the first mixing chamber (15),
• a second opening (27) leading to the second mixing chamber (22), the first (17) and second (27) openings being arranged on either side of the separating flap (32), and
• an assembly cavity near said duct (14),
- and **characterized in that** said device (2) furthermore comprises:
• a partition (C; 320) able to close the first (17) or the second (27) opening according to the operating mode of said device (2), and
• an additional module (200; 300) arranged in the assembly cavity of the housing (4), in aeraulic communication with said duct (14) and with
the first opening (17) when the second opening (27) is closed, or
the second opening (27) when the first opening (17) is closed,
so as to delimit selectively a circulation channel for the air flow between the first opening (17) and said duct (14), or between the second opening (27) and said duct (14).

2. Device (2) according to the preceding claim, wherein:
- the housing (4) comprises two end faces (4a, 4b) in a longitudinal axis (X) congruent with the longitudinal axis of said vehicle when the device (2) is in a state mounted in said vehicle, and wherein
- the additional module (200; 300) is arranged at a longitudinal end face (4b) of the housing (4).

3. Device (2) according to one of Claims 1 or 2, wherein:
- the additional module (200) is mounted on a face (4b) of the housing (4), and wherein
- the partition (C) closing the first opening (17) or the second opening (27) depending on the operating mode of said device (2) is a partition (C) of the face (4b) of the housing (4) intended to receive the additional module (200).

4. Device (2) according to one of Claims 1 or 2, wherein the partition (320) closing the first opening (17) or the second opening (27) depending on the operating mode of said device (2) is provided on the additional module (300).

5. Device according to Claim 3, wherein the housing (4) has a partition (C) closing the first opening (17), and wherein an additional module (200) for a one-two zone or double layer mode is mounted on the housing (4) so as to delimit a circulation channel for the air flow between the second opening (27) and said duct (14).

6. Device (2) according to the preceding claim, wherein the additional module (200) for a one-two zone or double layer mode comprises a closing wall (202) closing the inlet of the assembly cavity.

7. Device (2) according to the preceding claim, wherein the closing wall (202) has a form complementary to the form of the inlet of the assembly cavity, and has at least one substantially flat portion (204).

8. Device (2) according to Claim 4, wherein an additional module (300) for a three-four zone mode is mounted on the housing (4) and comprises firstly an outer wall (302) delimiting the air flow circulation channel which connects the first opening (17) of the housing (4) to said duct (14), and secondly an inner wall (320) forming a partition closing the second opening (27) of the housing (4).

9. Device (2) according to the preceding claim, wherein the additional module (300) for a three-four zone mode comprises an opening (307) intended to be brought into aeraulic communication with the first opening (17) of the housing (4).

10. Device (2) according to one of Claims 8 or 9, wherein the additional module (300) for a three-four zone mode is mounted on a face of the housing (4), and wherein the outer wall (302) of the additional module (300) for a three-four zone mode comprises:
- a first part (304) extending along a curve, and
- a second part (306) extending substantially parallel to the face of the housing (4) carrying said additional module (300).

11. Device (2) according to the preceding claim, wherein the first part (304) of the outer wall (302) of the additional module (300) for a three-four zone mode is substantially outwardly curved or convex with a convexity oriented towards the outside of the additional module (300) for a three-four zone mode.

12. Device (2) according to any of Claims 8 to 11, wherein the additional module (300) for a three-four zone mode comprises a flap arranged movably in the air flow circulation channel.

13. Additional module (200) for a heating, ventilation and/or air conditioning device (2) according to any of Claims 5 to 7, able to delimit a circulation channel for the air flow between the second opening (27) of the housing (4) of said device (2) below the separating flap (32) in a vertical axis (Z) when said device (2) is in the state mounted in said vehicle, and said duct (14),
**characterized in that** said additional module (200) comprises a closing wall (202) able to close an inlet of an assembly cavity provided on the housing (4) in order to receive said additional module (200).

14. Additional module (300) for a heating, ventilation and/or air conditioning device (2) according to any of Claims 8 to 12, able to delimit a circulation channel for the air flow between the first opening (17) of the housing (4) of said device (2) above the separating flap (32) in a vertical axis (Z) when said device (2) is in the state mounted in said vehicle, and said duct (14),
**characterized in that** said additional module (300) comprises:
- an outer wall (302) able to delimit said air flow circulation channel,
- an opening (307) intended to be arranged in aeraulic communication with the first opening (17) of the housing, and
an inner wall (320) forming a partition closing the second opening (27) of the housing (4).
